# DEMANDE DE BREVET EUROPEEN

(11) **EP 4 786 973 A1**
(43) Date de publication de la demande: **05.08.2026**
(21) Numéro de dépôt: 25305161.9
(22) Date de dépôt: 04.02.2025
(51) Int. Cl.: G01N 30/86, B01D 15/18, G16C 20/10, G01N 30/88, G01N 30/60, G01N 30/38

(54) **CONTRÔLE DE PROCÉDÉ DE SÉPARATION CHROMATOGRAPHIQUE DE TYPE LIT MOBILE SIMULÉ**

(71) Demandeur: APPLEXION, 01700 Saint Maurice de Beynost (FR)
(72) Inventeur: Valery, Eric, 69270 Rochetaillée sur Saône (FR); Rodriguez Redondo, Ana, 69100 Villeurbanne (FR); Beyerle, Marlène, 69003 Lyon (FR)
(74) Mandataire: Bandpay & Greuter

(57) **Abrégé**

L'invention concerne un procédé mis en œuvre par ordinateur pour l'apprentissage automatique d'une fonction configurée pour contrôler un procédé de séparation chromatographique d'un mélange comprenant au moins deux composés dans un système multicolonne de type lit mobile simulé. La fonction comprend au moins un modèle configuré pour prendre en entrée des données de fonctionnement et pour fournir en sortie un rendement perdu par rapport à un rendement primaire pour l'un des composés du mélange. Le procédé d'apprentissage comprend :
- une obtention d'un ensemble de données ; et
- un apprentissage automatique de la fonction à partir de l'ensemble de données obtenu.

L'invention concerne aussi un procédé d'utilisation d'une telle fonction apprise, un programme d'ordinateur pour l'exécution de tels procédés, un support de stockage pour un tel programme et un système contenant un tel support.

## Description

### Domaine de l'invention

La présente invention concerne le domaine des programmes et systèmes informatiques, et plus spécifiquement des procédés, un système et un programme pour le contrôle d'un procédé de séparation chromatographique d'un mélange.

### Arrière-plan technique

La chromatographie est une technique de séparation basée sur la différence de distribution des composés d'un mélange entre une phase mobile et une phase stationnaire. Les composés sont séparés en percolant une phase mobile constituée par un solvant liquide, gazeux ou supercritique dans un dispositif (appelé colonne ou cellule) rempli de phase stationnaire, une séparation étant opérée lorsque tout ou partie des composés ont une vitesse de percolation différente les uns par rapport aux autres. Cette méthode est mise en œuvre comme technique d'analyse afin d'identifier et de quantifier les composés d'un mélange. Elle peut également être mise en œuvre comme technique de purification.

Il existe aujourd'hui des systèmes capables de réaliser un procédé de séparation chromatographique dit continu qui permet une utilisation plus efficace des phases stationnaires et une meilleure séparation des mélanges complexes par rapport aux procédés traditionnels en une seule colonne. Des exemples de tels systèmes incluent notamment les systèmes multicolonnes de type lit mobile simulé, appelés dans ce qui suit systèmes SMB (acronyme de l'anglais « Simulated Moving Bed », qui signifie en français lit mobile simulé) tels que décrits dans le document US 8,282,831. Cette technologie est utilisée principalement pour la séparation et la purification de composés dans les industries chimique, alimentaire et pharmaceutique. Dans cette technologie, un déplacement de la phase stationnaire est simulé par une séquence cyclique de commutation des points d'entrées et de sorties. Des exemples de tels systèmes incluent notamment les systèmes iSMB (acronyme de l'anglais « Improved Simulated Moving Bed », qui signifie en français lit mobile simulé amélioré), tels que décrits dans les documents EP 0342629 et US 5,064,539, les systèmes SSMB (acronyme de l'anglais « Sequential Simulated Moving Bed », qui signifie en français lit mobile simulé séquentiel), tels que décrits dans le document WO 2015/104464, les systèmes Powerfeed tels que décrits dans le document US 5,102,553, les systèmes ModiCon tels que décrits dans le document US 7,479,228, les systèmes VariCol tels que décrits dans les documents US 6,136,198, US 6,375,839, US 6,413,419 et US 6,712,973.

De tels systèmes comprennent généralement des colonnes connectées en série et remplies de phase stationnaire et des points d'injection de mélange, d'injection d'éluant, de collecte d'extrait et de collecte de raffinat qui commutent de manière cyclique entre ces colonnes. Ces points d'injection et de collecte définissent quatre zones 1, 2, 3 et 4, et les volumes de phase mobile appliqués dans ces quatre zones pendant une période peuvent être modifiés pour optimiser le réglage du système.

Une limitation de tels systèmes est que, lorsqu'ils ne sont pas correctement réglés, des pollutions croisées peuvent intervenir au niveau des points de collecte d'extrait et de raffinat. En effet, le réglage des volumes de phase mobile des quatre zones influe sur la façon dont les composés du mélange se distribuent entre l'extrait et le raffinat. Pour éviter de telles pollutions, une solution consiste à maximiser le volume de phase mobile en zone 1 et de le minimiser en zone 4. Cependant, cela a pour impact de maximiser le volume d'eau utilisé, induisant une dilution importante. Une telle solution n'est donc pas optimale.

Il existe donc un besoin de fournir une solution améliorée de contrôle d'un procédé de séparation chromatographique d'un mélange dans un système multicolonne de type lit mobile simulé.

### Résumé de l'invention

L'invention concerne en premier lieu un procédé mis en œuvre par ordinateur pour l'apprentissage automatique d'une fonction configurée pour contrôler un procédé de séparation chromatographique d'un mélange comprenant au moins deux composés dans un système multicolonne de type lit mobile simulé. Ce procédé d'apprentissage de la fonction est désigné par la suite comme « procédé d'apprentissage ». Le système comprend des colonnes connectées en série remplies de phase stationnaire et des points d'injection de mélange, d'injection d'éluant, de collecte d'extrait et de collecte de raffinat commutant de manière cyclique entre les colonnes. Le système comprend des zones 1, 2, 3 et 4. La zone 1 est située entre le point d'injection **d'éluant** et le point de collecte de l'extrait. La zone 2 est située entre le point de collecte de l'extrait et le point d'injection du mélange. La zone 3 est située entre le point d'injection du mélange et le point de collecte du raffinat. La zone 4 est située entre le point de collecte du raffinat et le point d'injection d'éluant. La fonction comprend au moins un modèle d'intelligence artificielle configuré pour prendre en entrée des données de fonctionnement et pour fournir en sortie un rendement perdu par rapport à un rendement primaire pour l'un des composés du mélange. Le procédé d'apprentissage comprend :
- une obtention d'un ensemble de données comprenant, pour un ensemble d'échantillons d'entraînement, des données de fonctionnement et des rendements perdus associés ; et
- un apprentissage automatique de la fonction à partir de l'ensemble de données obtenu.

Dans des modes de réalisation, le rendement primaire est obtenu en maximisant le volume de la zone 1 ou en minimisant le volume de la zone 4.

Dans des modes de réalisation, les données de fonctionnement prises en entrée par le au moins un modèle comprennent des paramètres incluant des volumes de raffinat et d'extrait.

Dans des modes de réalisation, la fonction comprend un premier modèle. Les données de fonctionnement prises en entrée par le premier modèle incluent des mesures de concentration en différents nœuds du système, et/ou des mesures de concentration dans l'extrait et/ou le raffinat.

Dans des modes de réalisation, les mesures de concentration en différents nœuds du système comprennent :
- au moins une valeur de concentration prélevée en zone 4 et en zone 1 ; et
- au moins une valeur de concentration prélevée en zone 2 et en zone 3.

Dans des modes de réalisation, les échantillons d'entraînement incluent des échantillons d'entraînement pour les séparations chromatographiques suivantes :
- plusieurs isothermes, par exemple de type Langmuir, linéaire et anti-Langmuir, parmi lesquelles de façon non restrictive :
   o une purification d'un acide lactique, par exemple de type Langmuir ;
   o une purification de sucres glucose-fructose, par exemple de type anti-Langmuir ;
   o **une purification** de glycérol et sels, par exemple de type linéaire.

Les échantillons d'entraînement peuvent optionnellement inclure des échantillons d'entraînement pour différentes vitesses d'écoulement dans le système.

Dans des modes de réalisation, la fonction comprend un deuxième modèle. Les données de fonctionnement prises en entrée par le deuxième modèle incluent des mesures de rendement de tous les composés de la séparation chromatographique dans l'extrait et/ou le raffinat.

Dans des modes de réalisation, l'ensemble de données est obtenu par simulation du procédé de séparation chromatographique.

Dans des modes de réalisation, chaque modèle a une architecture comprenant :
- au moins deux couches cachées :
- une fonction d'unité linéaire rectifiée (ReLU) ; et
- une couche de sortie incluant une fonction linéaire.

L'invention concerne également un procédé d'utilisation d'une fonction apprise automatiquement selon le procédé d'apprentissage tel que décrit ci-dessus. Ce procédé d'utilisation de la fonction est désigné par la suite comme « procédé d'utilisation ». Le procédé d'utilisation comprend :
- une obtention de données de fonctionnement d'un procédé de séparation chromatographique dans un système multicolonne de type lit mobile simulé ; et
- une application de la fonction aux données de fonctionnement obtenues.

Dans des modes de réalisation, le procédé d'utilisation comprend en outre, après l'application de la fonction, une utilisation du rendement perdu fourni en sortie par la fonction pour contrôler le procédé de séparation chromatographique.

L'invention concerne également un premier programme d'ordinateur et un deuxième programme d'ordinateur comprenant des instructions qui, lorsque ces programmes sont exécutés sur un ordinateur, conduisent celui-ci à mettre en œuvre respectivement le procédé d'apprentissage et le procédé d'utilisation tels que décrits ci-dessus. L'invention concerne également un troisième programme d'ordinateur incluant les premier et deuxième programmes d'ordinateur.

L'invention concerne également un support de stockage lisible par ordinateur sur lequel est enregistré l'un des programmes d'ordinateur tels que décrits ci-dessus.

L'invention concerne également un système comprenant un processeur couplé à une mémoire. La mémoire a enregistré l'un des programmes d'ordinateur tels que décrits ci-dessus. Le système peut également comprendre un système multicolonne de type lit mobile simulé tel que décrit ci-dessus ou être uniquement un système de commande, connecté au système multicolonne de type lit mobile simulé et distinct de celui-ci.

La présente invention permet de répondre au besoin exprimé dans l'état de la technique. Elle fournit plus particulièrement une solution pour améliorer le contrôle d'un procédé de séparation chromatographique d'un mélange dans un système multicolonne de type lit mobile simulé.

En particulier, dans l'état de la technique, il n'existe pas de solution permettant de réduire de manière optimale les pollutions croisées dans le système. Dans l'invention, la fonction apprise fournit automatiquement une estimation rapide et précise du rendement perdu dans le système, ce qui permet d'ajuster au mieux le réglage du procédé de séparation chromatographique dans le système.

### Brève description des figures

[Fig. 1]. La **figure 1** illustre des exemples d'organigrammes du procédé d'apprentissage et du procédé d'utilisation.
[Fig. 2], [Fig. 3]. Les **figures 2** **et** **3** représentent de manière schématique des exemples de systèmes SMB.
[Fig. 4], [Fig. 5]. Les **figures 4** **et** **5** illustrent un exemple de modèle selon l'invention.
[Fig. 6], [Fig. 7], [Fig. 8] , [Fig. 9]. Les **figures 6 à 9** illustrent un exemple de l'étape d'obtention de l'ensemble de données du procédé d'apprentissage.
[Fig. 10]. La **figure 10** montre un exemple de profil de concentration.
[Fig.11.1], [Fig.11.2], [Fig.11.3]. Les **figures 11.1** **11.2** **et** **11.3** représentent de manière schématique le rendement perdu par rapport au rendement primaire fourni par la fonction sur différents exemples.
[Fig. 12]. La **figure 12** montre un exemple de système.

### Description détaillée

L'invention est maintenant décrite plus en détail et de façon non limitative dans la description qui suit.

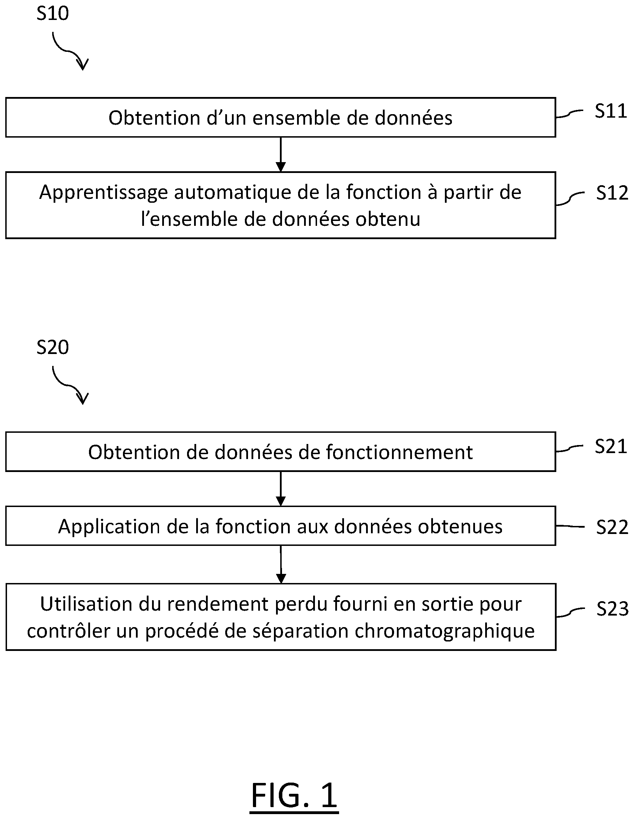

En référence à l'organigramme de la **figure 1****,** l'invention concerne un procédé mis en œuvre par ordinateur pour l'apprentissage automatique d'une fonction configurée pour contrôler un procédé de séparation chromatographique d'un mélange comprenant au moins deux composés dans un système multicolonne de type lit mobile simulé. Ce procédé d'apprentissage de la fonction est désigné par la suite comme « procédé d'apprentissage ». Le système comprend des colonnes connectées en série remplies de phase stationnaire et des points d'injection de mélange, d'injection d'éluant, de collecte d'extrait et de collecte de raffinat commutant de manière cyclique entre les colonnes. Le système comprend des zones 1, 2, 3 et 4. La zone 1 est située entre le point d'injection d'éluant et le point de collecte de l'extrait. La zone 2 est située entre le point de collecte de l'extrait et le point d'injection du mélange. La zone 3 est située entre le point d'injection du mélange et le point de collecte du raffinat. La zone 4 est située entre le point de collecte du raffinat et le point d'injection d'éluant. La fonction comprend au moins un modèle configuré pour prendre en entrée des données de fonctionnement et pour fournir en sortie un rendement perdu par rapport à un rendement primaire pour l'un des composés du mélange. Le procédé d'apprentissage comprend une obtention S11 d'un ensemble de données comprenant, pour un ensemble d'échantillons d'entraînement, des données de fonctionnement et des rendements perdus associés. Le procédé d'apprentissage comprend un apprentissage automatique S12 de la fonction à partir de l'ensemble de données obtenu.

Le procédé d'apprentissage améliore le contrôle du procédé de séparation chromatographique du mélange dans le système multicolonne de type lit mobile simulé.

En effet, le rendement perdu fourni en sortie par la fonction apprise permet d'évaluer le niveau de pollutions croisées dans le système, et donc d'ajuster en conséquence le réglage du procédé de séparation chromatographique. Par exemple, lorsque le rendement perdu est important, le volume de phase mobile appliqué dans les différentes zones du système peut être modifié en conséquence pour améliorer le rendement. A l'inverse, lorsque le rendement perdu est faible, le volume de phase mobile appliqué dans les différentes zones du système peut rester le même ou être diminué, ce qui permet d'éviter une augmentation inutile du volume d'éluant utilisé. La fonction apprise permet donc d'atteindre un réglage amélioré du procédé de séparation chromatographique dans le système de l'utilisateur.

En outre, la fonction apprise fournit automatiquement une estimation rapide et précise du rendement perdu dans le système à partir des données de fonctionnement. Utiliser la fonction apprise est notamment plus rapide que de réaliser une simulation du procédé. La fonction permet donc à un utilisateur, par exemple un ingénieur ou opérateur en charge du réglage du système, d'obtenir les performances du système sans efforts fastidieux, ni calculs complexes, sans avoir de connaissance approfondie du procédé de chromatographie : l'utilisateur fournit les données de fonctionnement et la fonction calcule automatiquement le rendement perdu. Un tel procédé améliore donc également l'ergonomie.

### Mise en œuvre par ordinateur des procédés

Le procédé d'apprentissage et le procédé d'utilisation sont mis en œuvre par un ordinateur. Cela signifie que les étapes (ou la quasi-totalité des étapes) de ces procédés sont exécutées par au moins un ordinateur, ou tout système similaire. Ainsi, les étapes des procédés sont effectuées par l'ordinateur, éventuellement de manière entièrement automatique ou semi-automatique. Dans certains exemples, le déclenchement d'au moins certaines étapes des procédés peut être effectué par interaction entre l'utilisateur et l'ordinateur. Le niveau d'interaction nécessaire entre l'utilisateur et l'ordinateur peut dépendre du niveau d'automatisation prévu et être équilibré avec le besoin de respecter les souhaits de l'utilisateur. Dans certains exemples, ce niveau peut être défini par l'utilisateur et/ou prédéfini.

Par exemple, les étapes d'obtention S21 des données de fonctionnement et d'application S22 de la fonction aux données obtenues peuvent être déclenchées par l'utilisateur. Dans ce cas, le procédé d'utilisation peut comprendre un déclenchement, par l'utilisateur, d'une estimation du rendement perdu pour au moins l'un des composés du mélange. L'ordinateur peut comprendre un écran et être configuré pour afficher à l'utilisateur sur cet écran une interface graphique comprenant un bouton spécifique pour déclencher les étapes du procédé d'utilisation. Le composé en question pour lequel le rendement perdu est estimé peut par exemple être sélectionné par l'utilisateur à ce moment. Le déclenchement et la sélection peuvent être réalisées de n'importe quelle manière. Par exemple, l'utilisateur peut sélectionner le composé en question dans une liste affichée sur l'interface, ou bien entrer le nom du composé. Le déclenchement peut alors comprendre la réalisation d'une interaction sur ce bouton par l'utilisateur.

L'obtention S21 des données de fonctionnement peut comprendre, après le déclenchement par l'utilisateur, une mesure des données de fonctionnement sur le système (par exemple par des capteurs du système), puis, un enregistrement de ces données (par exemple sur une mémoire de l'ordinateur). Les données de fonctionnement mesurées peuvent par exemple dépendre du composé sélectionné. Ensuite, à l'étape S22, la fonction peut être appliquée aux données mesurées et enregistrées. Alternativement, le système peut être configuré pour mesurer régulièrement ces données, par exemple en effectuant des mesures à intervalles réguliers (toutes les secondes ou toutes les minutes par exemple). Dans ce cas, l'étape d'obtention S21 des données peut être réalisée de manière continue, et l'interaction de l'utilisateur peut déclencher l'étape S22 d'application de la fonction, par exemple aux dernières données mesurées.

Dans d'autres exemples encore, l'étape d'application S22 peut également être réalisée de manière continue. Par exemple, à chaque nouvelle mesure des données, le procédé d'utilisation peut comprendre une mise à jour du rendement perdu calculé en appliquant la fonction aux nouvelles données mesurées. Dans ce cas, l'interaction de l'utilisateur peut uniquement consister en une sélection du composé pour lequel le rendement perdu est estimé.

Un exemple typique de mise en œuvre par ordinateur d'un procédé consiste à exécuter les procédés avec un système adapté à cet effet. Le système peut comprendre un processeur couplé à une mémoire et une interface graphique utilisateur (GUI), la mémoire contenant un programme informatique comprenant des instructions pour exécuter les procédés. La mémoire peut également stocker une base de données. La mémoire peut être tout matériel adapté à un tel stockage, comprenant éventuellement plusieurs parties physiques distinctes (par exemple, une pour le programme, et éventuellement une pour la base de données).

Dans des exemples, le procédé d'apprentissage peut être exécuté avant le procédé d'utilisation. Par exemple, l'apprentissage automatique S12 peut comprendre une détermination des poids de chaque modèle. L'apprentissage S12 de la fonction peut comprendre l'apprentissage de chaque modèle de la fonction (par exemple en parallèle ou l'un après l'autre). L'apprentissage S12 de chaque modèle peut être réalisé de n'importe quelle manière. Par exemple, les poids de chaque modèle peuvent être déterminés de sorte à minimiser une fonction de coût. Cette fonction de coût peut quantifier une différence entre des rendements perdus prédits par chaque modèle sur une portion des échantillons d'entraînement (appelée en anglais « training dataset », qui signifie en français ensemble de données d'entrainement) et les rendements perdus associés réels de ces échantillons d'entraînement. L'apprentissage S12 peut ensuite comprendre une validation des poids déterminés en appliquant chaque modèle avec les poids déterminés sur l'autre portion des échantillons d'entraînement (appelée en anglais « validation dataset », qui signifie en français ensemble de données de validation). La validation des poids déterminés peut comprendre le calcul d'un score de précision, et la comparaison de ce score avec un seuil de précision souhaité par exemple. Un fois validés, l'apprentissage peut comprendre un enregistrement des poids déterminés pour chaque modèle, par exemple sur une mémoire. Dans ce cas, l'application S22 de la fonction peut comprendre une récupération des poids enregistrés sur la mémoire, et une utilisation de chaque modèle, avec les poids récupérés pour ce modèle, sur les données de fonctionnement obtenues à l'étape S21.

Dans d'autres exemples, le procédé d'apprentissage peut être exécuté pendant le procédé d'utilisation. En d'autres termes, le procédé d'utilisation peut comprendre l'apprentissage de la fonction, c'est-à-dire les étapes S11 et S12. Dans ce cas, la fonction apprise peut être utilisée à l'étape S22 directement après son apprentissage à l'étape S12.

### Mise en œuvre des procédés

Dans des exemples, le procédé d'apprentissage peut être réalisé pendant une première phase dite « hors ligne » (ou phase d'entraînement). Par exemple, le procédé d'apprentissage peut être exécuté au niveau d'un serveur informatique comprenant une mémoire sur laquelle est enregistré l'ensemble de données et un processeur permettant de réaliser l'apprentissage de la fonction à partir de l'ensemble de données. Les étapes S11 et S12 peuvent dans ce cas être exécutées par ce serveur.

Le procédé d'utilisation peut lui être réalisé pendant une deuxième phase dite « en ligne » (ou phase d'inférence). Par exemple, le serveur peut être intégré dans un système comprenant un ou plusieurs ordinateurs dits « clients », et le procédé d'utilisation peut être exécuté dans ce système par le serveur et les un ou plusieurs ordinateurs dits « clients ». Par exemple, chaque ordinateur dit « client » peut être relié à un système multicolonne de type lit mobile simulé respectif dans lequel un procédé de séparation chromatographique est en cours. Dans ce cas, l'obtention S21 des données de fonctionnement peut comprendre une mesure, pour le procédé de séparation chromatographique en cours dans le système respectif de l'un des ordinateurs dits « clients », des données de fonctionnement, un envoi, par cet ordinateur dit « client », de ces données de fonctionnement au serveur, et une réception, par le serveur, de ces données. La fonction peut ensuite, à l'étape S22, être appliquée par le serveur aux données de fonctionnement ainsi réceptionnées, afin de prédire le rendement perdu pour le procédé en cours dans le système respectif de l'ordinateur dit « client ». Le procédé d'utilisation peut ensuite comprendre un envoi, par le serveur, du rendement perdu prédit à l'ordinateur dit « client », afin qu'un utilisateur de ce dernier puisse éventuellement adapter les réglages du procédé en cours en conséquence. Par exemple, l'ordinateur dit « client » peut être configuré pour afficher le rendement perdu à l'utilisateur.

### Présentation générale du procédé de séparation chromatographique

L'invention concerne le contrôle d'un procédé de séparation chromatographique d'un mélange comprenant au moins deux composés dans un système multicolonne de type lit mobile simulé. Ce procédé de séparation chromatographique est maintenant discuté plus en détail. Le procédé de séparation chromatographique du mélange est réalisé dans le système multicolonne de type lit mobile simulé. Ce système comprend un ensemble de plusieurs colonnes de chromatographie contenant une phase stationnaire. Le procédé de séparation chromatographique comprend successivement, de manière cyclique, dans une partie donnée du système :
- une étape de collecte d'un raffinat, une étape d'injection du mélange à séparer, une étape de collecte d'un extrait et une étape d'injection de phase mobile.

Les différentes étapes ci-dessus se succèdent temporellement dans cette partie du système. La partie en question du système est de préférence située entre la sortie d'une colonne et l'entrée de la colonne suivante (c'est-à-dire que chaque injection ou collecte est de préférence effectuée entre deux colonnes successives). Alternativement, la partie en question du système peut inclure une colonne ou une partie de colonne (c'est-à-dire que chaque injection ou collecte peut éventuellement être effectuée dans une colonne).

A un instant donné, une ou plusieurs des étapes ci-dessus peuvent être simultanément mises en œuvre dans une ou plusieurs parties du système. Par exemple, toutes ces étapes peuvent être simultanément mises en œuvre dans des parties respectives du système.

Par *« mélange »,* ou *« mélange à séparer* », on entend un mélange d'espèces (ou composés, dont notamment les molécules) contenant au moins deux espèces, par exemple au moins une espèce d'intérêt et au moins une impureté. Le mélange à séparer peut être binaire, lorsqu'il est essentiellement composé de deux espèces, ou complexe, lorsqu'il est composé de plus de deux espèces. Le mélange à séparer peut être dilué dans une phase liquide, de préférence la phase mobile utilisée dans le procédé chromatographique.

Selon des modes de réalisation, le mélange à séparer comprend une ou plusieurs espèces choisies parmi :
- un sucre monosaccharide, par exemple le glucose, le fructose, le désoxyribose, le ribose, l'arabinose, le xylose, le lyxose, le ribulose, le xylulose, l'allose, l'altrose, le galactose, le gulose, l'idose, le mannose, le talose, le psicose, le sorbose ou le tagatose, et/ou un sucre polysaccharide, par exemple un galacto-oligosaccharide, un fructo-oligosaccharide ou un hydrolysat de bois, et/ou
- des protéines, et/ou
- des acides aminés, et/ou
- des acides organiques tels que de l'acide citrique, et/ou
- des sels minéraux, et/ou
- des espèces ionisées, et/ou
- des alcools et/ou des glycols, et/ou
- des acides organiques issus de milieux naturels ou enzymatiques ou fermentaires.

Cette liste est non-exhaustive, l'invention dans son intégralité peut s'effectuer sur des espèces chimiques à séparer quelles qu'elles soient.

Dans certains modes de réalisation, le mélange à séparer comprend un ou plusieurs monosaccharides. De préférence, l'extrait et le raffinat sont enrichis en des monosaccharides différents. Avantageusement, le monosaccharide comporte 5 ou 6 atomes de carbone. De préférence, le monosaccharide est choisi parmi le glucose, le fructose, le désoxyribose, le ribose, l'arabinose, le xylose, le lyxose, le ribulose, le xylulose, l'allose, l'altrose, le galactose, le gulose, l'idose, le mannose, le talose, le psicose, le sorbose, le tagatose et un mélange de ceux-ci. Dans certains modes de réalisation, le mélange à séparer comprend du glucose et du fructose.

Dans la présente description, les termes *« mélange à séparer* », *« charge », « mélange à traiter », « produit à purifier »* et *« mélange initial »* désignent la même chose.

Par « éluant », on entend la phase mobile injectée dans le système de chromatographie pour déplacer les composants le long des colonnes, ainsi les termes « phase *mobile »* et *« éluant* » désignent la même chose dans la présente invention. Dans les procédés utilisant des résines comme phases stationnaire, la phase mobile ou éluant est très souvent composée d'eau avec parfois des additifs de minéraux, acides ou bases. Par extension le terme « eau » désigne également la phase mobile ou l'éluant.

Par *« raffinat »,* on entend une fraction enrichie en espèces moins retenues par la phase stationnaire. Dans le cas d'un mélange initial binaire, il s'agit de la fraction enrichie en espèce la moins retenue.

Par « *extrait* » on entend une fraction enrichie en espèces plus retenues par la phase stationnaire. Dans le cas d'un mélange initial binaire, il s'agit de la fraction enrichie en espèce la plus retenue.

Les colonnes chromatographiques sont de préférence disposées en série et en boucle fermée, une sortie d'une colonne étant reliée à une entrée de colonne suivante, la sortie de la dernière colonne étant reliée à l'entrée de la première colonne.

Les colonnes peuvent également être appelées « *cellules »* de chromatographie. Elles peuvent être utilisées dans un système de carrousel, disposées les unes à côté des autres, ou encore disposées les unes au-dessus des autres au sein d'une ou deux tours afin de limiter l'encombrement au sol.

Les colonnes peuvent contenir une phase stationnaire liquide ou solide, de préférence solide, sous forme de particules. L'éluant peut être un fluide à l'état gazeux, liquide voire supercritique, de préférence à l'état liquide. Des lignes d'injection de mélange à séparer et d'éluant sont prévues de préférence en entrée des différentes colonnes, et des lignes de collecte d'extrait et de raffinat sont prévues de préférence en sortie des colonnes. Ces lignes d'injection et de collecte prévues en entrées et en sortie des différentes colonnes constituent les points d'injection et de collecte du système. De préférence, ces lignes d'injection et de collecte sont connectées sur des lignes de connexion entre deux colonnes successives.

Dans certains modes de réalisation avantageux, le système comprend aussi des organes de séquençage des lignes d'injection et de collecte, c'est-à-dire que les lignes d'injection et de collecte se déplacent, de préférence de manière synchrone. En particulier, le séquençage de ces lignes d'injection et de collecte peut être périodique, sur un cycle de fonctionnement du système. Dans la présente demande, un « *cycle de fonctionnement »* ou « *cycle »* désigne la durée au bout de laquelle les lignes d'injection et de collecte ont été séquencées jusqu'à revenir à leur position initiale dans le système. Au bout d'un cycle, le système est à nouveau dans sa configuration initiale. La durée entre deux décalages de l'ensemble des lignes d'injection et de collecte correspond à une période. Un cycle comporte en général autant de périodes que de colonnes dans la boucle de séparation. Ainsi le cycle d'un procédé mis en œuvre sur un système à 8 colonnes est composé de 8 périodes.

Le déplacement des lignes de collecte (d'extrait et raffinat) et des lignes d'injection (de charge et de phase mobile) dans le système est également appelé commutation des lignes dans la présente description. Cette commutation des lignes peut être effectuée en ouvrant ou en fermant des vannes dans un système fluidique comportant d'une part des conduites de connexion entre colonnes successives, et d'autre part une ou plusieurs conduites d'alimentation connectées en entrée de chaque colonne et une ou plusieurs conduites de prélèvement connectées en sortie de chaque colonne (par exemple, de telles conduites d'alimentation et conduites de prélèvement peuvent être branchées sur chaque conduite de connexion entre colonnes successives).

On peut généralement définir quatre zones dans un système de type lit mobile simulé (SMB) :
- la zone 1 située entre le point d'injection d'éluant et le point de collecte de l'extrait,
- la zone 2 située entre le point de collecte de l'extrait et le point d'injection de mélange à séparer,
- la zone 3 située entre le point d'injection de mélange à séparer et le point de collecte du raffinat, et
- la zone 4 située entre le point de collecte du raffinat et le point d'injection d'éluant.

Par « *volume* » on entend un débit de fluide intégré sur une période du cycle (ou, de manière équivalente, un débit de fluide moyen sur une période multiplié par la durée de la période). La période est généralement définie comme étant l'intervalle de temps qui sépare le mouvement d'une ligne d'injection ou de soutirage. Dans les procédés de type SMB, la période est un intervalle de temps qui rythme le mouvement des lignes d'entrées sorties. Dans les procédés séquentiels, les séquences peuvent être régulées par le volume et ainsi la période est d'une durée variable. Ainsi, le *« volume de la zone 1* » correspond au débit total circulant dans le système (notamment dans au moins une ou plusieurs colonnes successives) entre le point d'injection d'éluant et le point de collecte de l'extrait, intégré sur une période. Le « *volume de la zone 4* » correspond au débit total circulant dans le système (notamment dans au moins une ou plusieurs colonnes successives) entre le point de collecte du raffinat et le point d'injection d'éluant, intégré sur une période. Le *« volume de raffinat* » signifie le volume total du raffinat qui est collecté sur une période ; le « *volume d'extrait* » signifie le volume total de l'extrait qui est collecté sur une période ; le *« volume d'éluant* » signifie le volume total de l'éluant qui est injecté sur une période ; et le *« volume de mélange »* (ou charge) signifie le volume total du mélange qui est injecté sur une période.

Les volumes des zones peuvent optionnellement être exprimés avec la grandeur BV (acronyme de l'anglais « *Bed Volume »,* qui signifie en français volume de lit). La grandeur BV correspond au volume traversant chacune des zones divisé par le volume d'une cellule.

### Utilités et rôles des zones

L'optimisation du réglage d'un système de type SMB peut comprendre une modification des volumes de phase mobile dans les différentes zones pendant une période.

Chaque zone joue un rôle bien défini dans le système afin de distribuer les composés de façon harmonieuse. Afin d'illustrer ces rôles de zones, les paragraphes suivants utilisent un exemple simple basé sur au moins deux composés contenus dans la charge à séparer, A étant la notation du composé le moins retenu, B étant la notation du composé le plus retenu.

### Principe de fonctionnement des zones 2 et 3

Les composés A et B entrent dans le système par l'injection de charge. Pour que le composé A arrive purifié au raffinat, il faut qu'il suive le mouvement de la phase mobile et que le composé B soit majoritairement bloqué par la zone 3. Pour que le composé B arrive purifié à l'extrait, il faut que le composé A soit majoritairement accéléré par la zone 2.

Sur une période, le volume de phase mobile en zone 2 et 3 doit donc être suffisamment élevé pour que le composé A se déplace de plus d'une colonne et pas trop élevé de façon à ce que le composé B se déplace de moins d'une colonne.

En résumé : si les volumes en zone 2 et en zone 3 sont harmonieusement définis, alors les composés A et B seront collectés purifiés respectivement dans les fractions de raffinat et d'extrait.

Ainsi, chaque composé rentre à travers la ligne de charge et se trouve en premier lieu distribué au travers des zones 2 et 3, ce qui induit la définition d'un rendement primaire pour chaque composé.

### Principe de fonctionnement de la zone 1

Le composé B est le composé le plus retenu, il a donc tendance à rester sur la phase stationnaire, et avec le déplacement périodique des points d'entrées et de sorties à se retrouver au niveau du raffinat après plusieurs périodes. Il y a donc besoin en zone 1 d'un volume de phase mobile qui soit suffisamment élevé pour faire avancer le composé B de plus d'une colonne par période. Ainsi, le composé B présent en zone 2 et qui se retrouve après la commutation des vannes en zone 1 sera poussé vers l'extrait.

En résumé : si le volume en zone 1 est suffisamment élevé pour faire avancer le composé B vers l'extrait, alors le raffinat ne risque pas d'être pollué par le composé B. Au-delà d'une certaine valeur de volume en zone 1, spécifique à chaque séparation, la pollution vers le raffinat a disparu, un plateau a été atteint et augmenter le volume de zone 1 n'aura plus d'impact.

### Principe de fonctionnement de la zone 4

Le composé A est celui qui est le moins retenu, il a donc tendance à suivre la phase mobile. Ainsi, en zone 4, sur une période, est appliqué un volume de phase mobile suffisamment faible pour ne pas faire avancer le produit A de plus d'une colonne. Si ce n'est pas le cas, le produit A se retrouve poussé de la zone 4 vers la zone 1 et dès lors, le produit A traversera la zone 1 et sera collecté à l'extrait.

En résumé : si le volume en zone 4 est suffisamment bas pour ne pas faire avancer le composé A vers la sortie de zone 4, alors l'extrait ne risque pas d'être pollué par le composé B. En-dessous d'une certaine valeur de volume en zone 4, spécifique à chaque séparation, la pollution vers l'extrait a disparu, un plateau a été atteint et diminuer le volume de zone 4 n'aura plus d'impact.

### Conclusions

Dans un fonctionnement équilibré, on résume les rôles de chaque zone selon les critères suivants :
- Zone 1 : éluer B - cela implique un volume en zone 1 élevé,
- Zone 2 : éluer A sans éluer B,
- Zone 3 : freiner B et éluer A,
- Zone 4 : freiner A - cela implique un volume en zone 4 faible.

Le volume d'éluant à injecter pendant chaque période est égal à la différence entre le volume utilisé en zone 1 et celui en zone 4. Le volume de charge à injecter pendant chaque période est égal à la différence entre le volume utilisé en zone 3 et celui en zone 2. Un système se règle donc à travers les volumes de phase mobile qui traversent chacune de ces zones sur une période et plus généralement sur un cycle.

### Origines des pollutions croisées

Pour un système équilibré, si le composé A doit majoritairement aller au raffinat, les pertes du composé A vers l'extrait viennent de deux origines possibles : soit parce que le composé A a traversé la zone 2 (fuite de zone 2) soit parce que le composé A a traversé la zone 4 (fuite de zone 4, le composé A traversant la zone 4 peut alors être collecté en partie à l'extrait). Il existe donc deux origines possibles pour expliquer la présence de composé A à l'extrait : un volume de zone 2 bas ou un volume de zone 4 élevé.

Réciproquement, si le composé B doit majoritairement aller à l'extrait, les pertes du composé B vers le raffinat viennent de deux possibilités : soit parce que le composé B a traversé la zone 3 (fuite de zone 3) soit parce que le composé B a traversé la zone 1 (fuite de zone 1, le composé B traversant la zone 1 peut alors être collecté en partie au raffinat).

Il existe donc deux origines possibles pour expliquer la présence de composé B au raffinat : un volume de zone 3 haut ou un volume de zone 1 faible. L'ajustement par réglage de la façon dont A et B se distribuent entre l'extrait et le raffinat passe donc par une vérification de l'impact de la modification des volumes de phase mobile des quatre zones.

La conclusion la plus directe est que, pour ne pas prendre de risques, et simplifier les réglages, il faudrait maximiser le volume de phase mobile en zone 1 et le minimiser en zone 4, ce qui a comme impact de maximiser le volume d'éluant utilisé, induisant une dilution importante, et une baisse des performances économiques du système.

Il existe donc un intérêt industriel pour mesurer les contributions des différentes zones sur la distribution des produits dans un système. Pour bien régler un système, il est notamment primordial de mesurer précisément la façon dont les produits se distribuent au sein des différentes zones.

En résumé, chaque produit effectivement collecté à l'extrait et au raffinat est la résultante de la combinaison d'une contribution primaire via les zones 2 et 3 et d'une contribution perdue via les zones 1 et 4. Ceci amène à définir les notions de rendements effectifs (tels que mesurables expérimentalement), les notions de rendements primaires (distribution des produits via les zones 2 et 3) et les notions de rendements perdus (distribution des produits via les zones 1 et 4).

### Simulation du procédé de séparation chromatographique

Dans la présente demande, l'invention utilise la simulation numérique des procédés chromatographiques pour générer des ensembles de données qui peuvent être utilisés pour entrainer des modèles d'intelligences artificielles. La simulation de procédés chromatographiques est d'usage courant et plusieurs outils sont utilisables pour la réaliser :
- Des logiciels commerciaux existent.
- Des langages de programmation en libre usages ou sous licences permettent de résoudre les équations nécessaires à la simulation.
- De nombreux ouvrages décrivent les équations utilisables pour effectuer une simulation.

Les équations à résoudre pour effectuer une simulation servent à reproduire les phénomènes les plus importants parmi lesquels :
- Les équilibres de toute ou partie des composés de la charge à purifier entre la phase liquide et la phase solide. Ces équations d'équilibres sont souvent appelées isothermes.
- Les phénomènes de dispersion se produisant lors du déplacement des produits le long de la colonne : dispersion axiale, diffusion, cinétique d'adsorption/désorption.

Différentes équations existent pour chacun de ces phénomènes, et elles doivent être résolues dans le temps et dans l'espace jusqu'à atteindre un état cyclique stable. La simulation d'un procédé multicolonne nécessite la résolution de ces équations dans plusieurs colonnes et dont les concentrations d'entrée sont ajustées selon que de l'eau ou du produit à traiter et/ou la sortie d'une autre colonne du procédé alimentent l'une ou l'autre des colonnes. Les compositions des extraits et raffinats du procédé simulé sont obtenues par intégration ou moyenne des concentrations dans le temps de collecte des fractions.

Les paramètres des équations de simulations sont déterminés en utilisant des résultats expérimentaux obtenus sur une ou plusieurs colonnes. Ainsi, une injection de faible volume sur une colonne permet de mesurer la rétention moyenne des composés (caractéristique de l'équilibre phase liquide / phase solide de chaque composé) et la largeur du pic (caractéristique des phénomènes de dispersion). Des tests à volume injecté plus important permettent d'observer si le temps de rétention diminue avec la quantité injectée (isotherme dite Langmuir) ou s'il augmente (isotherme dite anti Langmuir) ou s'il reste constant (istherme linéaire). Ces notions d'isotherme sont décrites dans « Preparative Chromatography » de Schmidt-Traub (ISBN 3-527-30643-9 & 978-3-527-32897-7), « Chromatographic Processes » de Nicoud (ISBN 978-1-107-08236-6) et dans « Fundamentals of Preparative and Nonlinear Chromatography » de Guiochon (ISBN 978-0-12-3270537-2).

En résumé, pour effectuer une simulation M0 d'une application en particulier, il faut avoir pour chacun des N composés simulés, des paramètres et équations pour calculer les équilibres liquide-solide et les phénomènes de dispersion : cinétique et/ou diffusion.

Le changement d'un ou plusieurs de ces paramètres devrait être considéré comme menant à une autre simulation M1, puis M2, puis M3 etc....

Dès lors qu'une simulation est mise en place, elle peut être utilisée pour regarder comment les paramètres procédé (concentration des espèces dans le produit à traiter, vitesse de la phase mobile, volume de la phase mobile) font évoluer les performances.

Dans des exemples notamment, les rendements perdus associés d'une partie (ou de l'ensemble) des échantillons d'entraînement peuvent avoir été obtenus par simulation du procédé de séparation chromatographique dans le système. La simulation peut être configurée pour prendre en entrée des données sur le procédé de séparation chromatographique, telles que sur les composés du mélange ou système, et sur le réglage du système, et fournir en sortie un rendement pour un ou plusieurs des composés du mélange considéré en fonction du réglage considéré. L'ensemble de données peut être obtenu de n'importe quelle manière. Par exemple, l'obtention S11 de l'ensemble de données peut comprendre, pour chaque échantillon pour lequel le rendement perdu est obtenu par simulation, des données issues de l'utilisation en deux étapes de la simulation : une première étape pour calculer le rendement effectif avec le réglage considéré pour l'échantillon, et une seconde étape pour obtenir le rendement primaire par exemple en maximisant le volume dans la zone 1 et en minimisant le volume dans la zone 4, et une détermination du rendement perdu par calcul de la différence entre les rendements obtenus pour ces deux réglages.

### Contrôle du procédé de séparation chromatographique

Dans la présente demande, par *« rendement »,* ou « rendement effectif », on entend le rapport de masse d'un composé dans une des deux fractions collectées (extrait ou raffinat) par rapport à la masse totale de ce composé dans les deux fractions collectées cumulées ou également le rapport entre la masse de ce composé dans une des deux fractions rapportée à la masse dans la charge injectée.

Comme expliqué dans les paragraphes précédents, le rendement est la combinaison de deux composantes : le flux de matière issu des zones 2 et 3 et le flux de matière des zones 1 et 4 issu des pollutions croisées. Il va ainsi être distingué dans cette demande, les rendements avec et sans les pollutions croisées. Par définition, est appelé dans la présente demande « rendement primaire » le rendement de l'installation s'il n'y avait aucune pollution croisée. Le rendement effectif quant à lui est le rendement en prenant en compte les pollutions croisées. Le rendement effectif est le rendement qui est mesurable expérimentalement par prélèvement d'échantillons représentatifs des extraits et raffinats et mesure de leurs concentrations respectives. Un *« rendement perdu* » est la différence entre un rendement primaire et un rendement effectif. Ce rendement primaire peut correspondre au rendement pouvant être obtenu lorsque les pollutions croisées sont nulles pour le composé considéré, à partir du mélange considéré, avec l'éluant considéré, et dans le système chromatographique considéré. Le rendement primaire peut donc correspondre au rendement obtenu pour le composé lorsque le volume de la zone 1 est suffisamment élevé et le volume de la zone 4 est suffisamment faible. En d'autres termes, le rendement primaire correspond à celui que l'on aurait si on modifiait le réglage présent en maximisant le volume de la zone 1 et en minimisant le volume de la zone 4 (ce qui conduirait d'un autre côté à une consommation maximale d'éluant), tout en maintenant constant le volume de zone 2 et le volume de zone 3.

Le procédé d'utilisation peut être inclus dans un procédé de contrôle du procédé de séparation chromatographique exécuté dans le système, qui peut comprendre, après application de la fonction apprise automatiquement, un contrôle du procédé de séparation chromatographique dans le système, en fonction du rendement perdu fourni en sortie par la fonction. Lorsque la fonction ne comprend qu'un seul modèle, le rendement perdu fourni en sortie par la fonction peut être le rendement perdu fourni par ce modèle unique. Lorsque la fonction comprend plusieurs modèles, le rendement perdu fourni en sortie par la fonction peut correspondre au rendement perdu fourni par l'un des modèles. Par exemple, les différents modèles peuvent prendre en entrée différentes données de fonctionnement, et le modèle utilisé peut alors être celui pour lequel les données de fonctionnement sont fournis. Alternativement, si des données sont fournies pour plusieurs modèles, le rendement perdu fourni en sortie par la fonction peut correspondre à une moyenne des rendements perdus fournis en sortie par les différents modèles (ou bien à l'un d'entre eux, par exemple sélectionné par l'utilisateur).

L'utilisation S23 du rendement perdu fourni en sortie par la fonction peut comprendre une analyse du rendement perdu fourni et, en fonction du résultat de l'analyse, un réglage de paramètres de fonctionnement du système. Par exemple, les paramètres de fonctionnement peuvent inclure un volume appliqué dans chaque zone, et le réglage peut comprendre une modification du volume appliqué dans une ou plusieurs zones du système. Le réglage du système peut notamment entraîner une diminution du rendement perdu dans le système, c'est-à-dire réduire les pollutions croisées, c'est-à-dire la présence dans le raffinat d'un composé plus retenu (que l'on souhaite collecter dans l'extrait), ou la présence dans l'extrait d'un composé moins retenu (que l'on souhaite collecter dans le raffinat). On peut également qualifier ce phénomène de *« fuite »* d'un composé dans l'une des zones, comme cela sera expliqué plus en détail ci-dessous. Par exemple, la modification peut comprendre une augmentation du volume de la zone 1 ou une diminution du volume de la zone 4 en fonction du résultat de l'analyse. La modification de ces volumes peut être effectuée en modifiant le débit d'injection d'éluant et/ou d'injection de mélange et/ou de collecte d'extrait et/ou de collecte de raffinat ; et/ou en modifiant la durée de la période.

Le calcul selon l'invention du rendement perdu et le réglage des paramètres de fonctionnement peuvent être réalisés de manière automatique ou semi-automatique. La modification des paramètres de fonctionnement à réaliser peut, par exemple, être automatiquement déduite du résultat de l'analyse, et être automatiquement appliquée au système, par exemple après avoir été validée par l'utilisateur. Le procédé peut par exemple comprendre le calcul du signe du rendement perdu estimé pour en déduire la localisation de la fuite du composé, et une adaptation du réglage en conséquence. Par exemple, un rendement perdu positif signifie que le composé fuit par la zone 1, et le procédé peut dans ce cas automatiquement augmenter le volume de la zone 1. Un rendement perdu négatif lui signifie que le composé fuit par la zone 4, et le procédé peut augmenter le volume de la zone 4. Si le signe d'un rendement perdu désigne la zone à corriger, sa valeur absolue évalue son importance et ainsi participe à l'évaluation de l'amplitude de la correction à apporter. Le procédé peut ainsi comprendre une évaluation de l'amplitude d'augmentation du volume en zone 1 ou en zone 4 (selon le signe du rendement perdu) en fonction de la valeur absolue du rendement perdu.

Dans des exemples, le réglage peut également dépendre de l'importance du rendement perdu estimé. Par exemple, le procédé peut comprendre la modification des paramètres uniquement lorsque le rendement perdu estimé est significatif. Par exemple, la modification des paramètres de fonctionnement peut être automatique lorsque le rendement perdu dépasse un seuil prédéterminé (en valeur absolue, par exemple). Alternativement, l'utilisateur peut choisir de modifier ou non les paramètres de fonctionnement en fonction du rendement perdu estimé. Le procédé peut alors comprendre un affichage du rendement perdu estimé, et un déclenchement par l'utilisateur (par exemple, via un bouton spécifique) de la modification des paramètres lorsqu'il ou elle le juge pertinent. Le procédé peut également dans ce cas suggérer la modification des paramètres à l'utilisateur lorsque le rendement perdu estimé est significatif (par exemple lorsqu'il dépasse le seuil prédéterminé), par exemple avec un affichage particulier de rendement perdu à l'utilisateur dans ce cas.

Le procédé d'utilisation fournit de manière particulièrement efficace une estimation précise du rendement perdu dans le système, ce qui améliore le réglage du procédé de séparation chromatographique, et donc, en fin de compte, sa productivité et sa qualité.

### Données prises en entrée par l'au moins un modèle

L'au moins un modèle est configuré pour prendre en entrée des données de fonctionnement. Par exemple, chaque modèle peut prendre en entrée des données de fonctionnement qui lui sont propres. On entend par *« données de fonctionnement »* des données qui sont relatives au fonctionnement du procédé de séparation chromatographique en cours dans le système en question. Pendant l'exécution du procédé d'utilisation, il s'agit de données relatives au fonctionnement du procédé de séparation chromatographique dont on cherche à calculer le rendement perdu.

Dans des exemples, les données de fonctionnement prises en entrée par l'au moins un modèle peuvent par exemple inclure des paramètres de réglage du système. Par *« paramètre de réglage »,* on entend un paramètre affectant le fonctionnement du procédé de chromatographie dans le système. Un paramètre de réglage peut par exemple être modifié par l'utilisateur pendant l'exécution du procédé de séparation chromatographique. Des exemples de paramètres incluent notamment les volumes de raffinat et d'extrait utilisés, qui sont des volumes physiques connus. Les volumes de raffinat et d'extrait correspondent respectivement aux volumes de fraction de raffinat et d'extrait obtenus sur une période.

Dans des exemples, les données de fonctionnement peuvent inclure, pour au moins un modèle, des mesures réalisées pendant l'exécution du procédé de séparation. Par « *mesure* », on entend une valeur quantifiant une propriété ou une caractéristique du fluide circulant à un endroit donné du système pendant l'exécution du procédé de séparation chromatographique. Par exemple, les données de fonctionnement peuvent inclure des mesures de concentration en différents nœuds du système, et/ou des mesures de concentration dans l'extrait et/ou le raffinat. Par *« nœud du* système » ou *« nœud d'observation »,* on entend un point physique du système de chromatographie qui peut être librement choisi. Dans certains modes de réalisation, le nœud d'observation est situé entre la sortie d'une colonne et l'entrée de la colonne suivante dans le système. Les mesures de concentration peuvent être des mesures de concentration du composé du mélange pour lequel le rendement perdu est prédit. Pendant l'entraînement, les mesures de concentration de chaque échantillon peuvent donc être pour le composé pour lequel le rendement perdu correspondant est associé. Pendant l'inférence, les mesures de concentration prises en entrée par l'au moins un modèle peuvent être pour le composé pour lequel on cherche à prédire le rendement perdu. La concentration d'un composé peut quantifier la proportion de ce composé dans le mélange. Dans des exemples, les mesures de concentration peuvent comprendre au moins une valeur de concentration prélevée en zone 4 et en zone 1, et au moins une valeur de concentration prélevée en zone 2 et en zone 3 (ces valeurs étant des valeurs de concentration pour le composant pour lequel le rendement perdu est calculé).

Dans des exemples, les données de fonctionnement peuvent inclure, pour au moins un modèle, des mesures de rendement de plusieurs composés du mélange dans l'une des fractions collectées, par exemple l'extrait. Les rendements des composés peuvent être déduits de mesures de concentrations de composés dans l'extrait et le raffinat ainsi que des volumes d'extrait et de raffinat.

Pendant l'apprentissage, l'ensemble de données peut comprendre des données obtenues pour un ensemble de procédés de séparation chromatographique différents réalisés dans un même système ou dans plusieurs systèmes différents (par exemple avec des phases stationnaires différentes, des éluants différents, des mélanges à séparer différents, des dimensionnements de système différents). Par exemple, chaque échantillon d'entraînement peut correspondre à un procédé de séparation chromatographique respectif réalisé avec des paramètres de fonctionnement respectifs. L'ensemble de données peut comprendre des échantillons correspondant à des procédés de différents types de séparations chromatographiques, et à différents réglages de ces procédés. Par exemple, l'ensemble de données peut inclure des échantillons d'entraînement pour des séparations chromatographiques utilisant des isothermes de type Langmuir, linéaire et anti-Langmuir. Par exemple, l'ensemble de données peut inclure des échantillons d'entraînement pour une ou plusieurs purifications d'un acide lactique (par exemple de type Langmuir), une ou plusieurs purifications de sucres glucose-fructose (par exemple de type anti-Langmuir), et/ou une ou plusieurs purifications de glycérol et sels (par exemple de type linéaire). L'ensemble de données peut également comprendre des échantillons d'entraînement obtenus à différentes vitesses d'écoulement dans le ou les systèmes dans lesquels ils sont réalisés.

### Résultat fourni par l'au moins un modèle

L'au moins un modèle est configuré pour fournir en sortie un rendement perdu pour l'un des composés du mélange. En d'autres termes, le modèle calcule un rendement perdu pour un composé donné du mélange, c'est-à-dire une valeur pour ce composant donné et qui pourrait être différente pour un autre composant. Ce composé donné peut être celui pour lequel des mesures sont fournies en entrée à l'au moins un modèle. Par exemple, lorsque les mesures de concentration ou de rendement prises en entrée par l'au moins un modèle sont des mesures pour un certain composé, le rendement perdu fournit en sortie par l'au moins un modèle peut être pour ce composé.

Le rendement perdu, qui correspond à la différence entre ce rendement primaire et le rendement effectif, permet donc de quantifier le gain potentiel de rendement qui serait réalisable si l'on modifiait le réglage du procédé. Il permet donc à l'utilisateur d'évaluer la pertinence d'appliquer ou non une modification du réglage du procédé dans le but d'améliorer le rendement pour le composé en question. En d'autres termes, la fonction permet de reconnaître pour chaque composé s'il est normalement récupéré à l'extrait ou au raffinat, et le rendement perdu indique ce qu'il est possible de gagner en rendement supplémentaire en ajustant les volumes en zone 1 ou 4. Par exemple, lorsque l'on cherche à obtenir un produit **N,** la fonction peut fournir une information de rendement de 80 %, avec possibilité de gagner +8 % maximum (le rendement perdu) si on augmente le volume de la zone 1.

Dans certains modes de réalisation, si le rendement perdu dépasse un seuil prédéterminé, on ajuste le volume en zone 1 ou 4 de sorte à augmenter le rendement effectif et à réduire le rendement perdu. Dans certains modes de réalisation, si le rendement perdu est inférieur à un seuil prédéterminé, aucun ajustement de volume en zone 1 ou 4 n'est effectué, de sorte à maintenir le rendement effectif sensiblement constant et à ne pas augmenter la consommation d'éluant.

### Exemples

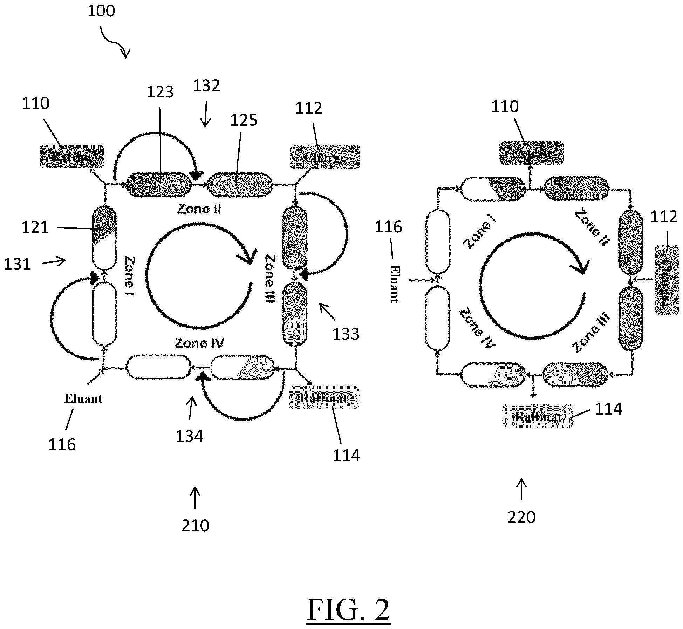

En référence aux **figures 2 à 12****,** des exemples de mise en œuvre de l'invention sont maintenant discutés.

### Exemples de système de type SMB

La **figure 2** représente de manière schématique un premier exemple de système SMB 100. Un tel système est utilisé principalement pour réaliser un procédé de séparation chromatographique permettant la séparation et la purification de composés dans les industries chimique, alimentaire et pharmaceutique. Il s'agit d'un procédé dit continu qui permet une utilisation plus efficace des phases stationnaires et une meilleure séparation des mélanges complexes par rapport aux procédés traditionnels en une seule colonne.

Le système SMB 100 est constitué de plusieurs colonnes connectées 121, 123, 125 en série, remplies de phase stationnaire. Un mouvement de la phase stationnaire est simulé par une séquence cyclique de commutation des points d'entrées et de sorties

Dans un tel système, entre ces colonnes 121, 123, 125, les liquides suivants sont injectés ou soutirés :
- La charge 112 (appelée aussi mélange) : le mélange à séparer est introduit en entrée d'une des colonnes. Ce mélange contient au moins deux composés à séparer A et B. Dans notre exemple, le composé A est moins retenu par la phase stationnaire que le composé B.
- L'éluant 116 : une phase mobile liquide est injectée pour déplacer les composés le long des colonnes. Dans des exemples, l'éluant peut être de l'eau pure ou avec une faible teneur en acide ou base (<2% masse).
- L'extrait 110 : fraction contenant majoritairement le composé le plus retenu (composé B).
- Le raffinat 114 : fraction contenant majoritairement le composé le moins retenu (composé A).

Les points d'injection et de soutirage définissent des zones qui sur le schéma ont la signification et numérotation suivante :
- « Zone 1 » 131 : s'applique aux colonnes entre le point d'injection d'éluant 116 et le point de collecte d'extrait 110.
- « Zone 2 » 132 : s'applique aux colonnes entre le point de collecte d'extrait 110 et le point d'injection de charge 112.
- « Zone 3 » 133 : s'applique aux colonnes entre le point d'injection de charge 112 et le point de collecte du raffinat 114.
- « Zone 4 » 134 : s'applique aux colonnes entre le point de collecte du raffinat 114 et le point d'injection d'éluant 116.

Les points d'injection de mélange 112, d'injection d'éluant 116, de collecte d'extrait 110 et de collecte de raffinat 114 commutent de manière cyclique entre les colonnes. La figure 2 montre le système dans une première situation 210, puis après une commutation 220 (chaque point d'injection ou de collecte étant décalé d'une colonne par rapport à la première situation).

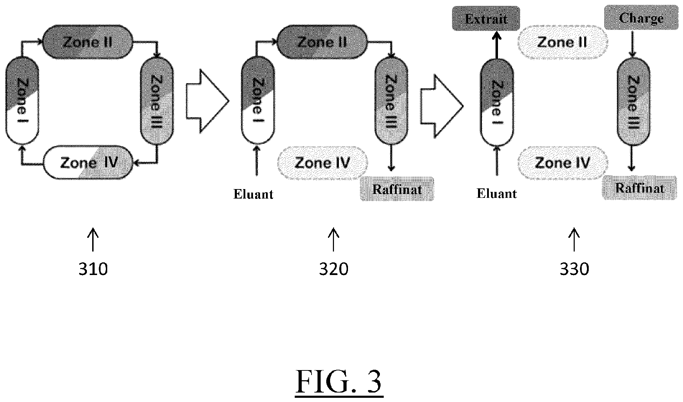

**La** **figure 3** représente de manière schématique un exemple de système SSMB. Pour un système SSMB, une période peut être découpée en plusieurs sous séquences 310, 320, 330, telles que représentées sur la figure. La première sous séquence 310 est une sous séquence dite de boucle (en anglais « *loop* sequence »), dans laquelle le fluide circule en boucle fermée dans le système, sans injection ni collecte de fluide. La deuxième sous séquence 320 est une sous séquence dite eau/raffinat (en anglais *« water*/*raffinate* sequence ») de boucle ouverte, dans laquelle on injecte de l'éluant et on collecte du raffinat, sans injection de mélange ni collecte d'extrait, et dans laquelle il n'y a pas de débit de fluide dans la zone 4. La troisième sous séquence 330 est une sous séquence dite eau/extrait (en anglais *« water*/*extract* sequence »), dans laquelle on procède aux injections de mélange et d'éluant, et aux collectes d'extrait et de raffinat, avec un débit de fluide nul dans la zone 2 et dans la zone 4.

Dans un tel système, le volume de phase mobile par zone est la somme des volumes dans chacune des sous séquences :
- Le volume de zone 1 est la somme des volumes dans la sous séquence de boucle 310, la sous séquence eau/raffinat 320 et la sous séquence eau/extrait 330 ;
- Le volume de zone 2 est la somme des volumes dans la sous séquence de boucle 310 et la sous séquence eau/raffinat 320 ;
- Le volume de zone 3 est la somme des volumes dans la sous séquence de boucle 310, la sous séquence eau/raffinat 320 et la sous séquence eau/extrait 330 ;
- Le volume de zone 4 est celui de la sous séquence de boucle 310.

Tant qu'il y a une injection d'éluant, une injection de charge, une collecte d'extrait et de raffinat, il est possible de calculer les volumes de phase mobile sur une période.

### Réseaux de neurones et apprentissage

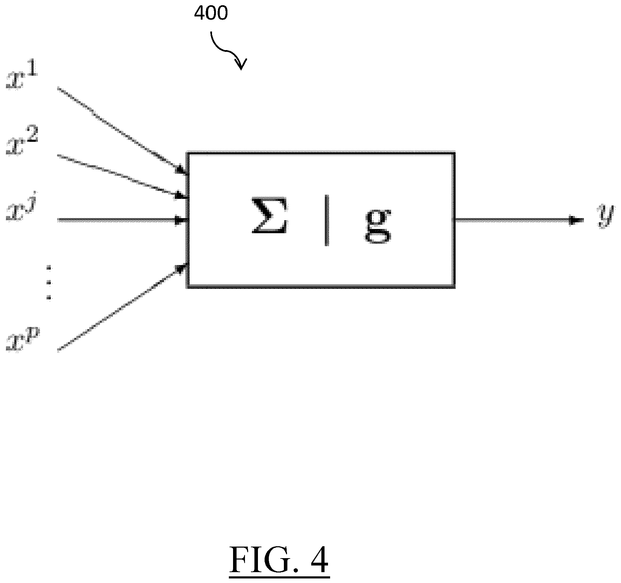

La fonction comprend au moins un modèle, qui peut être un réseau de neurones. Un réseau de neurones (traduction de l'anglais « Neural Network») est un modèle computationnel inspiré du fonctionnement des neurones biologiques du cerveau humain. Il est constitué de nœuds appelés neurones, organisés en couches (entrée, cachées et sortie), où chaque neurone d'une couche est connecté à ceux de la couche suivante par des poids. La **figure 4** illustre le principe d'un neurone 400 : la sortie y est fonction des données d'entrée et d'une pondération spécifique au neurone sur chacune d'entre elles.

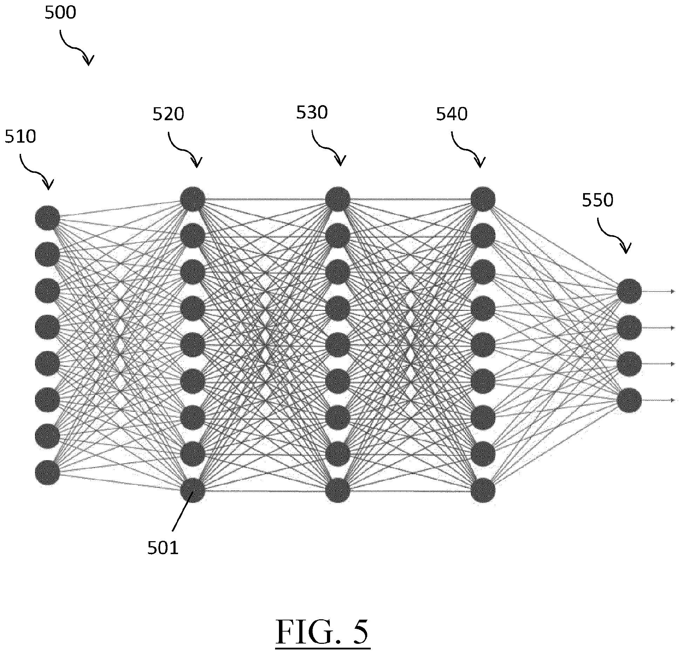

La **figure 5** illustre le principe d'un modèle 500 de type réseau de neurones selon l'invention. Les composants clés d'un tel modèle 500 sont les suivants :
- Neurones 501 (ou nœuds) : unités de base qui effectuent des calculs. Chaque neurone reçoit des signaux d'entrée, les pondère, les somme, et applique une fonction d'activation pour produire une sortie.
- Couches : les neurones sont organisés en couches :
   - Couche d'entrée 510 : reçoit les données initiales.
   - Couches cachées 520, 530, 540 : effectuent la transformation et l'extraction des caractéristiques.
   - Couche de sortie 550 : produit le résultat final du réseau.
- Poids : paramètres ajustables qui déterminent l'importance des connexions entre les neurones.
- Fonction d'activation : fonction appliquée à la sortie pondérée d'un neurone pour introduire de la non-linéarité (comme par exemple : les fonctions Sigmoïde, ReLU ou Tanh).
- Entraînement : processus d'ajustement des poids via un algorithme d'optimisation (comme la rétropropagation) pour minimiser l'erreur entre les prédictions du réseau et les valeurs attendues.

L'apprentissage ou l'entrainement d'un réseau de neurones consiste à ajuster les poids des connexions entre les neurones pour minimiser l'erreur entre les prédictions du réseau et les valeurs réelles. Pour cela, l'apprentissage se base sur un ensemble (appelé aussi « *base »)* de données d'apprentissage. Lorsque les poids sont déterminés, le réseau de neurone est utilisé pour effectuer le calcul du résultat à partir des valeurs de données d'entrée.

Les réseaux de neurones peuvent être utilisés pour diverses tâches comme la reconnaissance d'image, la traduction automatique, et bien d'autres applications d'apprentissage automatique. L'efficacité d'un apprentissage dépend de la qualité de la base de données utilisée pour l'apprentissage.

D'autres alternatives aux réseaux de neurones peuvent être utilisées dans l'invention, comme par exemple :
- Les forêts aléatoires (traduction de l'anglais *« Random Forests »)* : un ensemble de méthodes basées sur des arbres de décision. Les forêts aléatoires créent plusieurs arbres de décision à partir de sous-ensembles aléatoires des données et des caractéristiques, puis agrègent leurs résultats pour améliorer la précision et réduire le surapprentissage.
- Les Machines à vecteurs de support (traduction de « *Support Vector Machines »,* ou SVM) : algorithmes de classification qui cherchent à trouver le meilleur hyperplan séparant les classes de données dans un espace à haute dimension. Les SVM sont un ensemble de techniques d'apprentissage supervisé destinées à résoudre des problèmes de discrimination et de régression.
- Les k-plus proches voisins (en abrégé k-NN) : un algorithme de classification ou de régression basé sur la similarité des données. Pour une nouvelle donnée, k-NN trouve les k données d'entraînement les plus proches et utilise leurs étiquettes pour prédire la classe ou la valeur de la nouvelle donnée.
- Une régression linéaire : technique de base pour la régression. La régression linéaire est utilisée pour les problèmes de prédiction de valeurs continues, où la valeur de données inconnue utilise des autres valeurs de données connues.

### Réglage du système

Il est d'usage d'effectuer des prélèvements des fractions collectées soit pendant un cycle, soit sur une période. Ces échantillons sont ensuite analysés hors ligne afin d'obtenir les concentrations de chacun des échantillons collectés.

Il est aussi d'usage d'utiliser des capteurs en ligne pour mesurer les compositions des fractions d'extrait et de raffinat mais aussi de mesurer les concentrations des composés circulant dans le système. Il est fait référence à cet égard au document WO 2019/097182.

Ainsi, pour ajuster les réglages d'un système, il est possible d'utiliser les compositions des fractions collectées afin de juger de la qualité de la répartition des composés et de procéder à des ajustements. Comme deux origines sont possibles (zone 2/3 ou zone 1/4), une possibilité est de procéder par essai erreur, c'est-à-dire en testant les différentes solutions jusqu'à obtenir celle qui fonctionne. Cependant, cela implique de potentiellement devoir recommencer le réglage lorsqu'un premier ne donne pas de résultat, ce qui entraîne une perte de rendement, d'efficacité et de temps.

D'autre part, si des informations de mesures de concentrations entre les colonnes sont disponibles, alors il est possible d'évaluer un profil de concentration et de constater l'existence d'une fuite de zone 1 ou zone 4. Toutefois, si le profil de concentration montre une fuite de zone 2 et de zone 4 simultanée il est très difficile de savoir quelle est l'action la plus importante à mener.

La présente invention résout ces problèmes en permettant d'identifier directement l'origine de la fuite, et donc la solution de réglage à mettre en œuvre pour le système.

### Principe de fonctionnement

Dans un exemple, la fonction selon l'invention comprend deux modèles d'intelligence artificielle.

Le premier modèle prend comme paramètres d'entrée :
- optionnellement les volumes de raffinat et d'extrait, et
- des valeurs de concentration d'un composé (qui est celui pour lequel le rendement perdu est prédit) sur différents prélèvements, par exemple :
   o au moins une valeur de concentration prélevée en zone 4 et en zone 1, de préférence une pluralité de telles valeurs, par exemple trois telles valeurs pour chacune des zones 4 et 1, chaque valeur dans une zone étant obtenue à un nœud différent du système,
   o au moins une valeur de concentration prélevée en zone 2 et une valeur de concentration prélevée en zone 3, et
   o les valeurs de concentration au raffinat et à l'extrait. Le deuxième modèle prend comme paramètres d'entrée :
- les volumes de raffinat et d'extrait, et
- les rendements d'une pluralité de composés (par exemple de tous les composés) présents dans la charge à traiter sur une des deux fractions collectées.

En paramètre de sortie, chaque modèle d'intelligence artificielle calcule la proportion de composé qui traverse la zone 1 ou la zone 4. La fonction permet donc de calculer une même valeur avec deux méthodes différentes.

L'apprentissage de ces deux modèles d'intelligence artificielle peut se baser sur un ensemble de données s'appuyant sur n'importe quel outil de simulation. A cet ensemble de données peuvent naturellement s'ajouter toutes les données expérimentales disponibles. Toutefois une donnée expérimentale s'obtient en un à deux jours alors qu'une simulation nécessite entre quelques secondes et quelques minutes de calcul. L'utilisation d'une simulation pour obtenir les données d'entraînement permet donc de gagner du temps. Un premier avantage de la simulation est donc le gain de temps. Un second avantage réside en ce que toutes les situations possibles puissent être calculées : un fonctionnement équilibré selon les critères précédemment énoncés, comme un fonctionnement légèrement ou totalement déséquilibré. Quelle que soit la qualité des équations utilisées, la simulation fournit une bonne information de la dynamique comportementale.

### Logiciel de simulation et paramètres de procédé

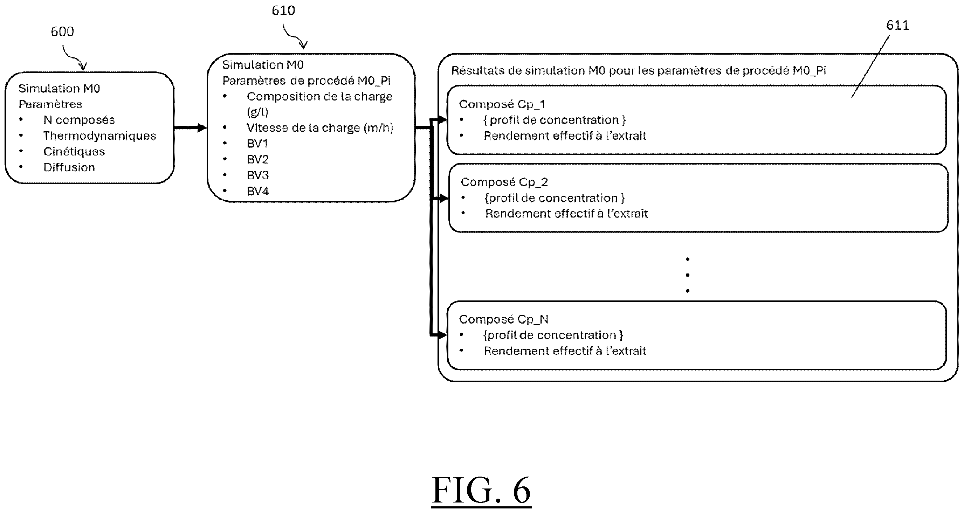

Les **figures 6 à 9** illustrent un exemple de l'étape d'obtention de l'ensemble de données du procédé d'apprentissage.

Un logiciel de simulation peut être utilisé pendant l'étape S11 pour obtenir l'ensemble de données d'entrainement ou consolider un ensemble contenant des données expérimentales. Un tel logiciel de simulation est généralement composé de plusieurs parties. Une première partie du logiciel comprend une description/paramétrage de la séparation. Cette partie permet à l'utilisateur de définir les paramètres d'équilibre pour chaque composé entre la phase mobile et la phase stationnaire ainsi que des paramètres de dispersion ou diffusion (des exemples de tels paramètres sont schématisés sous la référence « Simulation M0 » dans les figures).

Dans une deuxième partie, pour une simulation (M0) donnée, l'utilisateur définit les paramètres opératoires à appliquer au procédé, notamment les volumes de phase mobile dans chaque zone, la composition de la charge à simuler et la vitesse moyenne appliquée sur une zone (des exemples de tels paramètres de simulation sont schématisés sous la référence « M0_Pi » dans les figures).

Dans une troisième partie, pour un paramétrage « M0_Pi » donné et un jeu de volumes dans les quatre zones BV1, BV2, BV3, BV4, le logiciel de simulation calcule, pour chaque composé, les concentrations dans les colonnes à chaque pas de temps et les concentrations moyennes à l'extrait et au raffinat. A partir de ces données, le logiciel de simulation calcule aussi les rendements de répartition de tous les composés entre l'extrait et le raffinat.

Le logiciel de simulation calcule donc, pour un jeu de paramètres i : BV1ᵢ, BV2ᵢ, BV3ᵢ et BV4ᵢ, les valeurs de concentration de chaque composé dans les différentes zones, les valeurs de concentration dans les fractions d'extrait et de raffinat et les rendements associés.

En d'autres termes, la simulation permet de calculer, pour l'ensemble de données < BV1, BV2, BV3, BV4 > 610, l'ensemble de données résultant < Concentrations de profils, d'extrait, de raffinat >, et à partir de cet ensemble, l'ensemble résultant < Rendements extrait et/ou raffinat >.

Par convention, la simulation et l'au moins un modèle d'intelligence artificielle de la fonction peuvent fournir en sortie un rendement à l'extrait. Le rendement au raffinat peut alors se déduire par la formule suivante : rendement au raffinat = 100% - rendement à l'extrait. Alternativement, il est possible de considérer le rendement au raffinat, et dans ce cas inversement déduire le rendement à l'extrait de celui calculé au raffinat (par exemple en utilisant une formule analogue).

### Détermination des rendements effectif, primaire et perdu : impact des zones 1 et 4

L'obtention S11 de l'ensemble de données pour l'entrainement comprend également le calcul de la fraction de chaque composé traversant les zones 1 ou 4. Pour calculer les variations de rendement issues des zones 1 et 4, l'obtention S11 de l'ensemble de données peut également comprendre un calcul du rendement perdu pour chaque donnée d'apprentissage, par exemple avec n'importe laquelle des solutions suivantes.

### Solution 1 :

Pour n'importe quel jeu de paramètres MO_Pᵢ, une première solution peut consister à augmenter de façon incrémentale le paramètre BV1 de façon à ce que le rendement de chaque composé devienne constant, et ensuite diminuer le paramètre BV4 jusqu'à ce que le rendement de chaque composé devienne constant. On arrive alors à la simulation d'un réglage associé à M0_Pi pour lequel les flux de composés à travers les zones 1 et 4 ont été éliminés, c'est-à-dire au rendement primaire (ci-après dénommé « *M0_Pi primaire »).* Il est alors possible de calculer pour le réglage M0_Pi, et pour chaque composé, l'écart de rendement 630 (ou rendement perdu) en soustrayant le rendement effectif (calculé sans modification du réglage du rendement) au rendement primaire par exemple à l'aide de la formule suivante : Rendement perdu = Rendement primaire - rendement effectif. Chaque ligne résultante peut correspondre à une donnée d'apprentissage pour l'entrainement de l'au moins un modèle.

Cet écart de rendement est par définition nul pour le réglage *« M0_Pi primaire ».*

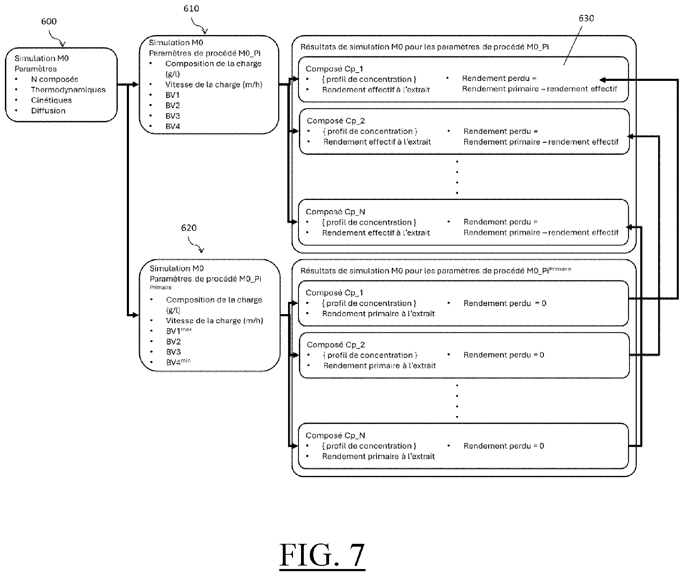

La détermination du rendement effectif, calculé sans modification du réglage, est présentée sur la figure 6 et reprise sur la partie haute de la figure 7. La détermination du rendement primaire, pour un BV1 max et un BV4 min, est présentée sur la partie basse de la figure 7 et la détermination du rendement perdu est présentée en 630 sur la figure 7.

### Solution 2 :

Une deuxième solution peut consister à partir d'un réglage sans fuite d'aucun composé à travers les zones 1 et 4 *(« M0_Pi primaire »).* Les paramètres BV1 et BV4 sont respectivement diminués et augmentés jusqu'à ce que des fuites de composés à travers les zones 1 et 4 apparaissent avec une valeur limite légèrement supérieure à BV2 pour la valeur la plus basse de BV1 et une valeur limite légèrement inférieure à BV3 pour la valeur la plus élevée de BV4. Ainsi, à un réglage M0_Pi primaire vont correspondre plusieurs réglages M0_Pi.

En utilisant par exemple une des deux solutions présentées ci-dessus, la simulation de n'importe quel jeu de paramètre M0_Pi permet de générer des données pour chacun des N composés, soit N jeux de données BV, un ensemble de concentrations (profils, extrait et raffinat) et une valeur de rendement perdu.

### Construction/apprentissage d'un premier modèle d'intelligence artificielle

Pour permettre l'apprentissage de ce modèle d'intelligence artificielle, une base de données a été créée à partir d'une simulation.

Cette simulation peut être basée sur n'importe laquelle des équations publiées, et à partir de n'importe lequel des logiciels existants qui sont capables de calculer des évolutions de profils dans le temps sur plusieurs colonnes.

Si l'on considère une simulation M0 avec N composés, l'obtention S11 de l'ensemble de données peut comprendre une utilisation de la simulation pour faire varier les paramètres de concentration de la charge, la vitesse moyenne de phase mobile et les valeurs de chaque volume BV de zone. Ainsi, pour la simulation M0, l'obtention S11 peut comprendre l'exécution d'un grand nombre de simulations en faisant varier l'un ou l'autre des paramètres, de sorte à générer ainsi « *M0_P^{tot}* » simulations au total (dans lesquelles sont incluses également les données sans fuites de zone 1 ou 4). Cet ensemble de simulations permet alors de générer une base de données de N_M0 x M0_P^{tot} éléments de BV, de concentrations et du rendement perdu.

Dans l'invention, il est également nécessaire d'utiliser une autre simulation M1, générant M1_P^{tot} éléments de simulation et pour chacun autant de données que de composés de M1. Soit N_M1 x M1_P^{tot} éléments.

Ce protocole est ensuite répété sur d'autres simulations M2 à M20, de sorte à obtenir des données sur au moins 21 simulations M0 à M20. A chaque répétition, chaque simulation génère autant d'informations que de composés du mélange considéré *N_Mᵢ*. Cela permet donc d'obtenir un ensemble composé de ∑*ₘ N_Mₘ · Mₘ_P^{tot}* données, chacune constituant un échantillon d'entrainement.

L'apprentissage peut alors être effectué avec tout ou partie de cet ensemble en fonction des données prises en entrée par le modèle. Par exemple, l'apprentissage peut être effectué avec les données d'entrée suivantes :
- volume BV de raffinat,
- volume BV d'extrait,
- 3 concentrations du composé considéré dans chacune des zones 1 et 4, et
- les concentrations extrait et raffinat du composé considéré.

La donnée de sortie est le rendement perdu du composé considéré.

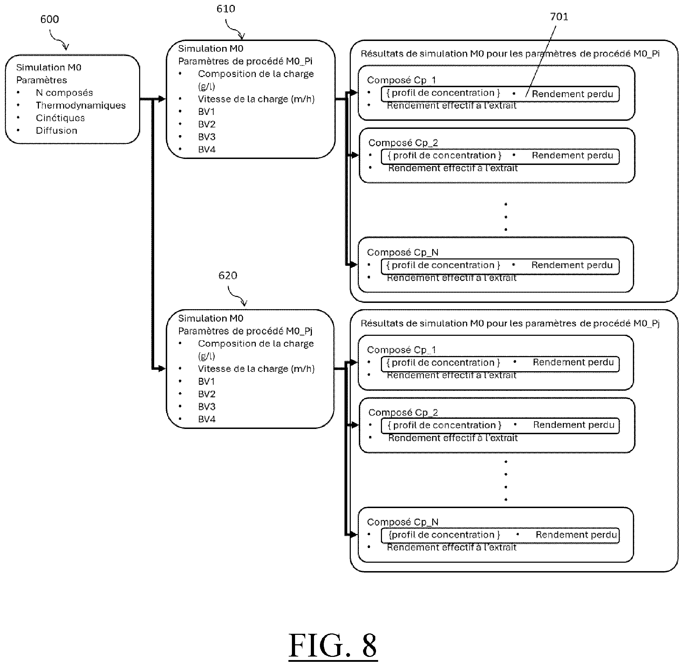

Sur la figure 8, pour ce modèle, chaque ligne 701 correspond donc à une donnée d'apprentissage.

Un grand avantage de cette intelligence artificielle est qu'elle est indépendante de la simulation et s'applique à chaque donnée disponible.

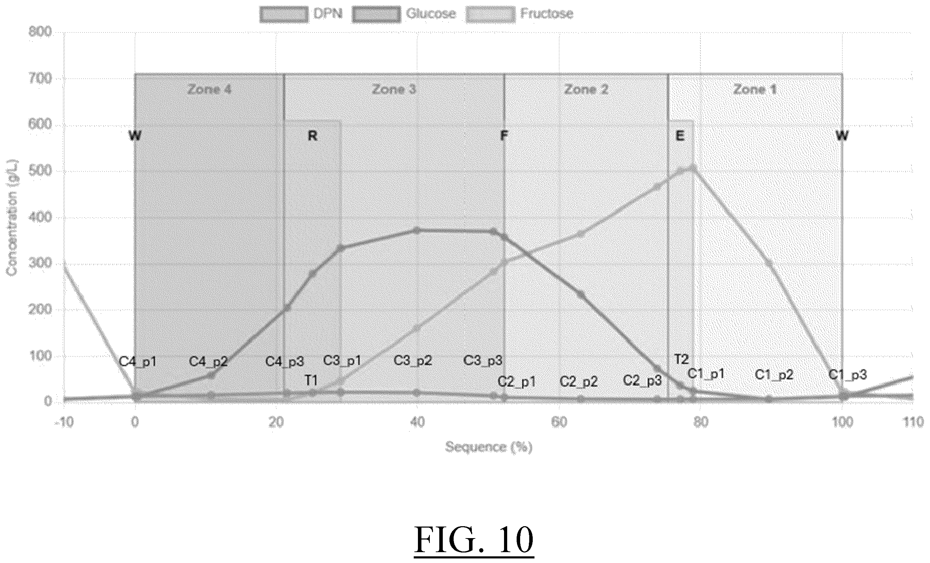

Dans un exemple, les paramètres d'entrée du modèle sont les douze valeurs suivantes (La **figure** 10 montre les concentrations correspondantes sur le profil de concentration correspondant) : BVR, BVX, 3 concentrations d'un composé en zone 4 (C4_p1, C4_p2, C4_p3), la concentration du composé au raffinat (T1), une concentration du composé en zone 3 au point le plus proche de la fin de la collecte du raffinat (C3_p1), une concentration du composé en zone 2 au point le plus proche du début de l'extrait (C2_p3), la concentration du composé à l'extrait (T2), 3 concentrations du composé en zone 1 (C1_p1, C1_p2, C1_p3).

Avec :
- BVR : volume BV de raffinat,
- BVX : volume BV d'extrait,
- C4_pi : concentrations dans la zone 4 en début, milieu et fin de boucle,
- T1 : concentration du raffinat,
- C3_p1 : première concentration après le raffinat,
- C2_p3 : dernière concentration avant l'extrait,
- T2 : concentration de l'extrait, et
- C1_pi : concentrations dans la zone 1 en début, milieu et fin de boucle.

Le paramètre de sortie est le rendement perdu.

Le réseau de neurones entrainé a une architecture qui peut comprendre :
- 1 à 3 couches (256 et 128 points),
- une fonction ReLU (acronyme de l'anglais « *rectified linear unit »,* qui signifie en français unité linéaire rectifiée) pour les couches cachées (en anglais « *hidden layers »),* et
- une fonction linéaire pour la couche de sortie.

La base de données : données normalisées des bases de données générées par simulation, par exemple pour les cas suivants :
- purification d'acide lactique - Langmuir,
- purification de sucres glucose-fructose - anti-Langmuir,
- purification de glycérol et sels - linéaire,
- 15 isothermes Langmuir, linéaires et anti-Langmuir, et
- 4 vitesses différentes.

### Résultat d'apprentissage

Les tableaux 1 et 2 suivants illustrent de façon non exhaustive les différentes options de construction du premier modèle d'IA tant sur la structure des données d'entrées pour lesquels le nombre de points profil de chaque zone a été modifié, pour lesquels les volumes de fractions ont été ou non utilisés, et pour différents modèles d'IA et différents paramétrages associés. En particulier, le tableau 1 détaille les paramètres d'IA pour chaque option de construction (une ligne par option) et les résultats, tandis que le tableau 2 présente les données d'entrée correspondantes. Dans cet exemple, deux modèles d'IA ont été testés : le modèle NN et le modèle Random Forest. Pour le modèle d'IA NN, plusieurs couches (2, 3 ou 4) ont été utilisées. Pour le modèle Random Forest (forêt aléatoire), plusieurs variantes ont été testées : le modèle Standard, le Bootstrap et le Gradient Boosting comprenant des variations sur le nombre d'arbres (« trees ») et la profondeur de la forêt aléatoire (« depth »).

**Tableau 1 :**

| | Paramètres d'IA | | | | |
|---|---|---|---|---|---|
| Lig ne | Type Modèle | Paramètres | | Coefficient de détermination R² | Ecart quadratique moyen RMSE |
| 1 | NN | 2 ReLU layers | 256 - 128 | 0.9984 | 0.0066 |
| 2 | | | 128-64 | 0.9976 | 0.0081 |
| 3 | | | 64-32 | 0.9963 | 0.01 |
| 4 | | | 32-16 | 0.9932 | 0.0135 |
| 5 | | | 16-8 | 0.987 | 0.0186 |
| 6 | | 3 ReLU layers | 128-64-32 | 0.9971 | 0.0088 |
| 7 | | | 64-32-16 | 0.9971 | 0.0089 |
| 8 | | | 32-16-8 | 0.9932 | 0.0135 |
| 9 | | 4 ReLU layers | 128-64-32-16 | 0.9987 | 0.0058 |
| 10 | | | 64-64-64-64 | 0.9983 | 0.0068 |
| 11 | | | 64-32-16-8 | 0.9975 | 0.0082 |
| 12 | | | 32-32-32-32 | 0.9963 | 0.0099 |
| 13 | | | 16-16-16-16 | 0.9927 | 0.0139 |
| 14 | | | 8-8-8-8 | 0.987 | 0.0187 |
| 15 | | 2 ReLU layers | 256 - 128 | 0.9987 | 0.0068 |
| 16 | | | 256 - 128 | 0.9978 | 0.0089 |
| 17 | | | 256 - 128 | 0.9981 | 0.0083 |
| 18 | | 2 ReLU Layers | 256 - 128 | 0.9946 | 0.014 |
| 19 | | 2 ReLU layers | 256 - 128 | 0.9853 | 0.023 |
| 20 | Random Forest | Standard | 100 trees 15depths | 0.9962 | 0.0117 |
| 21 | | Bootstrap | 100 trees 15depths | 0.9975 | 0.0095 |
| 22 | | Gradient Boosting | 100 trees 15depths | 1 | 0.0007 |
| 23 | | Gradient Boosting | 50 trees 10depths | 0.9977 | 0.0091 |
| 24 | | Gradient Boosting | 50 trees 15depths | 0.9998 | 0.0026 |
| 25 | | Gradient Boosting | 100 trees 10depths | 0.999 | 0.0061 |
| 26 | | Gradient Boosting | 50 trees 15depths | 0.9988 | 0.0065 |

**Tableau 2 :**

| | Données d'entrées | | | | |
|---|---|---|---|---|---|
| Ligne | BV fractions | Concentration Zone1 | Concentration Zone2 | Concentration Zone3 | Concentration Zone 4 |
| 1 | BVextrait (BVX) | 3 points | 1 (last) | 1 (first) | 3 points |
| 2 | | | | | |
| 3 | | | | | |
| 4 | | | | | |
| 5 | | | | | |
| 6 | | | | | |
| 7 | | | | | |
| 8 | | | | | |
| 9 | | | | | |
| 10 | BVraffinat (BVR) | | | | |
| 11 | | | | | |
| 12 | | | | | |
| 13 | | | | | |
| 14 | | | | | |
| 15 | | 1 (middle) | 1 (middle) | 1 (middle) | 1 (middle) |
| 16 | | 1 (last) | 1 (last) | 1 (last) | 1 (last) |
| 17 | | 1 (first) | 1 (first) | 1 (first) | 1 (first) |
| 18 | | 3 points | 1 (last) | 1 (first) | 3 points |
| 19 | None | 3 points | 1 (last) | 1 (first) | 3 points |
| 20 | BVextr | 3 points | 1 (last) | 1 (first) | 3 points |
| 21 | | | | | |
| 22 | | | | | |
| 23 | BVraff | | | | |
| 24 | | | | | |
| 25 | | | | | |
| 26 | None | | | | |

La légende (last), (middle), (first) désigne respectivement des mesures de concentrations faites à la fin, au milieu et au début de la zone ou de la séquence concernée.

Ceci montre la flexibilité de la démarche et sa compatibilité avec un grand nombre de modèles d'IA et de paramétrages différents.

Le nombre de profils, qui constitue le jeu de données d'entrainement pour réaliser ce premier modèle d'IA, a été de 1.048.576, c'est un ordre de grandeur, un nombre plus restreint d'informations de l'ordre de 200.000 profils peut déjà permettre d'obtenir des résultats intéressant. Cet ensemble de profils a été obtenu à partir de simulations différentes impliquant au total une quarantaine de composés ou familles de composés.

### Construction/apprentissage d'un deuxième modèle d'intelligence artificielle

Pour permettre l'apprentissage de ce second modèle d'intelligence artificielle, une base de données a été créée à partir d'une simulation.

Cette simulation peut être basée sur une simulation la plus proche de l'application de l'utilisateur, et à partir de n'importe lequel des logiciels existants qui sont capables de calculer le rendement à l'extrait des différents composés du produit à purifier.

Si l'on considère une Simulation M0 avec N composés, l'obtention S11 de l'ensemble de données peut comprendre une utilisation de la simulation pour faire varier les paramètres de concentration de la charge, la vitesse moyenne de phase mobile et les valeurs de chaque volume BV de zone. Ainsi, pour la simulation M0, l'obtention S11 peut comprendre l'exécution d'un grand nombre de conditions en faisant varier l'un ou l'autre des paramètres procédés, de sorte à générer ainsi « *M0_P^{tot}* » résultats de simulations au total (dans lesquelles sont incluses également les données sans fuites de zone 1 ou 4). Cet ensemble de résultats de simulations permet alors de générer une base de données de N_M0 x M0_P^{tot} éléments de BV, de concentrations et du rendement perdu.

L'apprentissage peut alors être effectué avec tout ou partie de cet ensemble en fonction des données prises en entrée par le modèle.

Dans un exemple, les paramètres d'entrée du modèle sont définis de la manière suivante. Le nombre de paramètres d'entrée peut dépendre de chaque modèle. Dans des exemples, si N est le nombre de composés d'intérêt dans le mélange, N+2 paramètres peuvent être utilisés. Ces N+2 paramètres peuvent être BVR, rX_i (i de 1 à N) et BVX avec :
- BVR : volume BV de raffinat.
- rX_i : rendements à l'extrait des composés i (i de 1 à N), classés dans l'ordre de leur volume BV de rétention.
- BVX : volume BV d'extrait.
- Optionnellement les paramètres de concentration du produit à traiter et les vitesses opératoires.

Le paramètre de sortie est le rendement perdu.

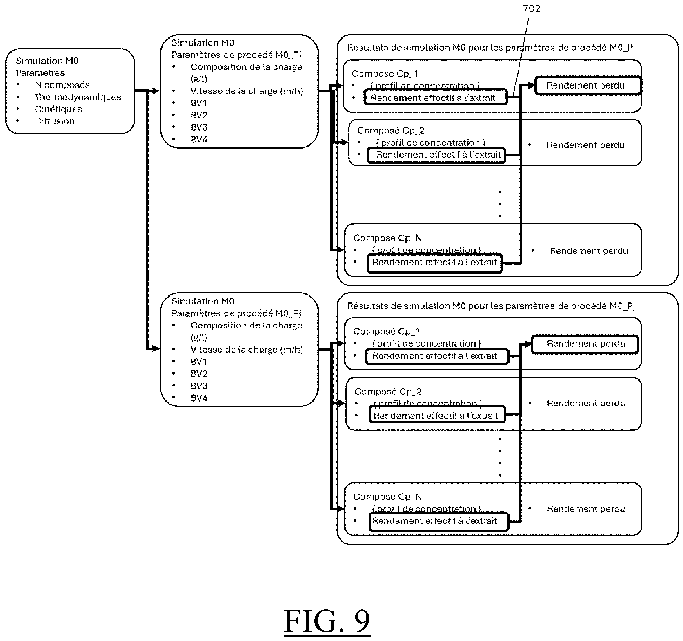

Sur la figure 9, pour ce modèle, chaque ensemble 702 correspond donc à une donnée d'apprentissage.

Le réseau de neurones entrainé a une architecture qui peut comprendre :
- 3 couches (256, 128 et 64 points),
- une fonction ReLU (acronyme de l'anglais « *rectified linear unit »,* qui signifie en français unité linéaire rectifiée) pour les couches cachées (en anglais « *hidden layers »),* et
- une ou plusieurs fonction(s) linéaire(s) pour la couche de sortie.

Pour chaque élément de simulation M0_Pi, l'étape d'apprentissage S12 peut considérer comme données d'entrée l'ensemble des rendements de composés 1 à N. La donnée de sortie est le rendement perdu d'un composé i. Dans cet exemple, l'apprentissage S12 peut comprendre un apprentissage du modèle d'intelligence artificielle pour chaque composé du mélange. En d'autres termes, l'apprentissage S12 peut comprendre une détermination d'un jeu de poids respectifs pour chaque composé. Dans le procédé d'utilisation, l'application S22 de la fonction peut comprendre une détermination du jeu de poids respectifs pour le composé considéré, et une application de la fonction avec le jeu de poids déterminé.

De façon surprenante, il a été observé que les rendements constituent une donnée fondamentale qui permet de prédire les rendements perdus. L'addition comme donnée d'entrée des BV d'éluant, de raffinat et d'extrait constitue également un élément d'affinement de la précision de ce modèle d'intelligence artificielle.

Par exemple, appliquer le second modèle d'IA sur la séparation glucose fructose et famille de dpn a nécessité un jeu de 28.800 données pour créer une IA pour le glucose, une IA pour le fructose, une IA pour les familles de dpn. Plus généralement le nombre de données minimum est de l'ordre de 15.000, et peut monter jusqu'à dépasser 30.000.

### Résultat d'apprentissage

Les tableaux 3 et 4 suivants illustrent la précision du second modèle d'IA sur un exemple de séparation de polymères de sucrose (dpn), glucose et fructose. En particulier, le tableau 3 détaille les paramètres d'IA pour chaque option de construction (une ligne par option) et les données d'entrée correspondantes, tandis que le tableau 4 présente les résultats. Dans cet exemple, deux modèles d'IA ont été testés : le modèle NN et le modèle Random Forest. Pour le modèle d'IA NN, plusieurs couches (1, 2, ou 3) ont été utilisées. Pour le modèle Random Forest (forêt aléatoire), plusieurs variantes ont été testées : le modèle Standard, le Bootstrap et le Gradient Boosting.

**Tableau 3 :**

| | Paramètres d'IA | | | Données d'entrées | |
|---|---|---|---|---|---|
| Ligne | Type Modèle | Paramètres | | BV fractions | Rdt effectif |
| 1 | NN | 3 ReLU layers | 256 - 128 - 64 | BVextrait BVX BVraffinat BVR | Dpn Glucose Fructose |
| 2 | | 3 ReLU layers 3 outlets | 256 - 128 - 64 | | |
| 3 | | 2 ReLU layers | 256 - 128 | | |
| 4 | | 1 ReLU layer | 256 | | |
| 5 | | 1 ReLU layer | 128 | | |
| 6 | | 3 ReLU layers | 256 - 128 - 64 | None | |
| 7 | Random Forest | Standard | 50 trees 10depths | BVextrait BVX | |
| 8 | | Bootstrap | | | |
| 9 | | Gradient Boosting | | BVraffinat BVR | |

**Tableau 4 :**

| | Modèle | | Modèle Glucose | | Modèle | |
|---|---|---|---|---|---|---|
| | dpn | | | | Fructose | |
| Ligne | Coefficient de détermination R² | Ecart quadratique moyen RMSE | Coefficient de détermination R² | Ecart quadratique moyen RMSE | Coefficient de détermination R² | Ecart quadratique moyen RMSE |
| 1 | 1 | 0.0001 | 0.9933 | 0.0023 | 0.9999 | 0.0019 |
| 2 | 1 | 0.0004 | 0.9970 | 0.0016 | 1 | 0.0011 |
| 3 | 1 | 0.0001 | 0.9976 | 0.0014 | 0.9999 | 0.002 |
| 4 | 1 | 0.0003 | 0.9861 | 0.0033 | 0.9988 | 0.0062 |
| 5 | 0.9996 | 0.001 | 0.9756 | 0.0044 | 0.9975 | 0.009 |
| 6 | 0.9999 | 0.0006 | 0.9876 | 0.0032 | 0.9885 | 0.0193 |
| 7 | 1 | 0.0004 | 0.9787 | 0.0041 | 0.9981 | 0.0078 |
| 8 | 1 | 0.0003 | 0.9872 | 0.0032 | 0.9988 | 0.0063 |
| 9 | 1 | 0.0003 | 0.9998 | 0.0004 | 0.9999 | 0.0017 |

Ceci montre la flexibilité de la démarche et sa compatibilité avec un grand nombre de modèles d'IA et de paramétrages différents. Notons bien que dans cette approche d'un second modèle d'IA, il est nécessaire d'avoir un modèle d'IA avec une seule sortie pour chaque composé de la simulation ou un unique modèle d'IA avec autant de sorties que de composés de la simulation.

Notons que des résultats acceptables sont également obtenus lorsque les BV des fractions d'extrait et de raffinat ne sont pas utilisés comme données d'entrée.

### Troisième modèle d'IA

De façon surprenante, il a été également découvert que l'usage d'IA peut s'appliquer également pour « dupliquer » le comportement d'une simulation. Comme expliqué précédemment, la simulation est plus rapide que les tests expérimentaux, toutefois la simulation d'un ensemble de paramètre de procédé peut requérir de quelques secondes à quelques minutes. Lors de la génération de la base de données du second modèle d'intelligence artificielle, nous créons une base de données regroupant les paramètres procédé (dont les BV appliqués au procédé et optionnellement les paramètres de concentration du produit à traiter et les vitesses opératoires), les rendements effectifs et les rendements perdus de chaque espèce. Pour le troisième modèle d'IA, il est possible d'utiliser un apprentissage basé sur les paramètres procédés comme paramètres d'entrées pour prédire les rendements perdus de chacune des espèces en tant que paramètre de sortie. Par extension, ce troisième modèle d'IA peut également inclure des modèles issus d'un apprentissage basé sur les paramètres procédé utilisés en entrée pour prédire en sortie les rendements primaires de chacune des espèces.

Une fois ce troisième modèle d'IA créé, il est possible de l'utiliser pour prédire le résultat d'un calcul de simulation : à partir d'un ensemble de paramètres procédés, les rendements primaires, perdus et effectifs sont calculés, et ceci en moins d'un dixième de seconde.

Un exemple est donné dans le tableau 5 ci-dessous pour la simulation de la séparation fructose, glucose et famille de dpn. Appliquer le troisième modèle d'IA sur la séparation glucose fructose et famille de dpn a nécessité un jeu de 28.800 données pour créer une IA pour le glucose, une IA pour le fructose, une pour les familles de dpn. Plus généralement le nombre de données minimum est de l'ordre de 15.000, et peut monter jusqu'à dépasser 30.000.

**Tableau 5 :**

| Ligne | Type Modèle | Paramètres d'IA | | Coefficient de détermination R² | Ecart quadratique moyen RMSE | Entrée | Rendement Sortie |
|---|---|---|---|---|---|---|---|
| 1 | NN | 2 ReLU layers | 64 - 32 | 0.9989 | 0.0003 | Paramètres procédés | Famille dpn primaire |
| 2 | | | | 0.9999 | 0.0022 | | Glucose primaire |
| 3 | | | | 0.9996 | 0.0043 | | Fructose Primaire |
| 4 | | | 256 - 128 | 0.9999 | 0.0005 | | Famille dpn rdt Perdu |
| 5 | | | | 0.9995 | 0.0006 | | Glucose rdt Perdu |
| 6 | | | | 0.9999 | 0.0012 | | Fructose rdt Perdu |

### Résultats d'utilisation des modèles d'intelligence artificielle appris

Les deux premiers modèles précédemment décrits fonctionnent avec une excellente précision lorsqu'ils sont exécutés sur des données d'entrée expérimentales. Une telle précision est également atteinte lorsque l'apprentissage se base partiellement ou exclusivement sur des données simulées, indépendamment des simulations choisies.

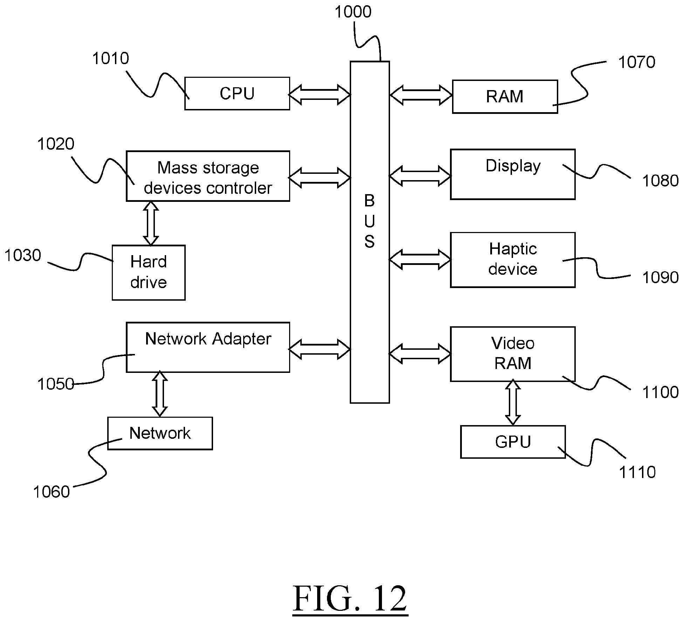

La **figure 12** montre un exemple de système, où le système est un ordinateur client, par exemple une station de travail d'un utilisateur. L'ordinateur client de l'exemple comprend une unité centrale de traitement (CPU) 1010 connectée à un bus de communication interne 1000, une mémoire vive (RAM) 1070 également connectée au bus. L'ordinateur client est en outre doté d'une unité de traitement graphique (GPU) 1110 qui est associée à une mémoire vive vidéo 1100 connectée au bus. La RAM vidéo 1100 est également connue dans le domaine sous le nom de mémoire tampon. Un contrôleur de périphérique de stockage de masse 1020 gère l'accès à un périphérique de mémoire de masse, tel qu'un disque dur 1030. Les dispositifs de mémoire de masse adaptés à l'incarnation tangible des instructions et des données de programmes informatiques incluent toutes les formes de mémoire non volatile, y compris, à titre d'exemple, des dispositifs de mémoire à semiconducteurs, tels que EPROM, EEPROM et dispositifs de mémoire flash ; des disques magnétiques tels que les disques durs internes et les disques amovibles ; des disques magnéto-optiques. Tous les dispositifs précités peuvent être complétés par, ou incorporés dans, des circuits intégrés spécifiques à une application (ASICs) spécialement conçus. Un adaptateur réseau 1050 gère l'accès à un réseau 1060. L'ordinateur client peut également inclure un dispositif haptique 1090, tel qu'un dispositif de contrôle du curseur, un clavier ou similaire. Un dispositif de contrôle du curseur est utilisé dans l'ordinateur client pour permettre à l'utilisateur de positionner sélectivement un curseur à n'importe quel endroit désiré sur l'écran 1080. De plus, le dispositif de contrôle du curseur permet à l'utilisateur de sélectionner diverses commandes et d'entrer des signaux de contrôle. Le dispositif de contrôle du curseur comprend un certain nombre de dispositifs de génération de signaux pour l'entrée de signaux de contrôle dans le système. Typiquement, un dispositif de contrôle du curseur peut être une souris, dont le bouton est utilisé pour générer les signaux. Alternativement ou en complément, le système informatique client peut comprendre un pavé tactile et/ou un écran tactile.

Le programme informatique peut comprendre des instructions exécutables par un ordinateur, les instructions comprenant des moyens pour amener le système susmentionné à exécuter les procédés. Le programme peut être enregistré sur tout support de stockage de données, y compris la mémoire du système. Le programme peut, par exemple, être mis en œuvre dans des circuits électroniques numériques, ou dans du matériel informatique, du micrologiciel, des logiciels, ou dans des combinaisons de ceux-ci. Le programme peut être mis en œuvre sous forme d'appareil, par exemple un produit incarné de manière tangible dans un dispositif de stockage lisible par une machine pour être exécuté par un processeur programmable. Les étapes des procédés peuvent être réalisées par un processeur programmable exécutant un programme d'instructions pour réaliser les fonctions des procédés en opérant sur des données d'entrée et en générant des résultats. Le processeur peut ainsi être programmable et couplé pour recevoir des données et des instructions d'un système de stockage de données, d'au moins un dispositif d'entrée, et d'au moins un dispositif de sortie. Le programme d'application peut être mis en œuvre dans un langage de programmation procédural ou orienté objet de haut niveau, ou en langage d'assemblage ou en langage machine si nécessaire. Dans tous les cas, le langage peut être un langage compilé ou interprété. Le programme peut être un programme d'installation complet ou un programme de mise à jour. L'application du programme sur le système aboutit en tout cas à des instructions pour exécuter les procédés. Le programme informatique peut être stocké et exécuté sur un serveur dans un environnement informatique de type cloud, le serveur étant en communication via un réseau avec un ou plusieurs clients. Dans ce cas, une unité de traitement exécute les instructions contenues dans le programme, provoquant ainsi l'exécution des procédés dans l'environnement informatique de type cloud.

### Exemple d'application des modèles d'intelligence artificielle

Considérons une séparation chromatographique d'un mélange de sucres comprenant des polymères de sucres appelés dpn, du glucose et du fructose. Lors d'une séparation sur un système chromatographique de type SSMB à 4 colonnes de 2 m de long, et 3 cm de diamètre, l'application des paramètres de zones ci-dessous a permis d'obtenir un premier résultat de purification :
BV1 = 0.668, BV2 = 0.58, BV3 = 0.63, BV4 = 0.53

Lorsque le système est stable, des mesures de compositions sont effectuées dans chaque zone afin de constituer un profil et des mesures de compositions des extraits et raffinats moyens sont effectuées.

Le résultat obtenu sur les différents composés est présenté dans les tableaux 6 et 7 suivants (concentrations en g/L) et également sur la figure 10:

**Tableau 6 :**

| Composé | C4_p1 | C4_p2 | C4_p3 | T1 | C3_p1 | C3_p2 | C3_p3 | C2_p1 | C2_p2 | C2_p3 |
|---|---|---|---|---|---|---|---|---|---|---|
| Fructose | 21.1 | 6.6 | 5.8 | 20.4 | 46.5 | 160.0 | 282.8 | 304.0 | 364.3 | 466.6 |
| Glucose | 12.5 | 57.8 | 204.8 | 278.7 | 333.1 | 372.1 | 369.7 | 357.5 | 233.6 | 72.9 |
| dpn | 13.4 | 16.1 | 20.7 | 21.4 | 22.3 | 21.4 | 14.8 | 11.2 | 7.7 | 6.7 |

**Tableau 7 :**

| Composé | T2 | C1_p1 | C1_p2 | C1_p3 |
|---|---|---|---|---|
| Fructose | 501.0 | 507.2 | 301.9 | 22.6 |
| Glucose | 36.7 | 24.9 | 6.9 | 12.5 |
| dpn | 7.3 | 7.3 | 7.3 | 13.4 |

Les rendements effectifs à l'extrait des espèces dpn, glucose et fructose ont été mesurés respectivement à 13.0%, 5.47% et 91.5%, les BV des raffinats et extraits sont respectivement égaux à 0.1 et 0.088.

### Usage de la première intelligence artificielle

La première intelligence artificielle a été appliquée sur chacune des espèces : fructose, glucose et dpn avec un modèle entrainé sur la base des BV extrait et raffinat, de la concentration extrait T2 et raffinat T1, et des compositions C4_p1, C4_pP2, C4_p3, C3_p1, C2_p3, C1_p1, C1_p2, C1_p3.

Pour le composé fructose, le premier modèle d'intelligence artificielle appliqué sur les données de la première ligne du tableau ci-dessus calcule un rendement perdu égal à 3.1%, correspondant à une fuite de zone 1.

Pour le glucose, la seconde ligne du tableau est utilisée pour calculer un rendement perdu est égal à -1%, correspondant à une fuite de zone 4.

Pour la famille dpn, la troisième ligne du tableau est utilisée pour calculer un rendement perdu est égal à -12.80%, correspondant à une fuite de zone 4.

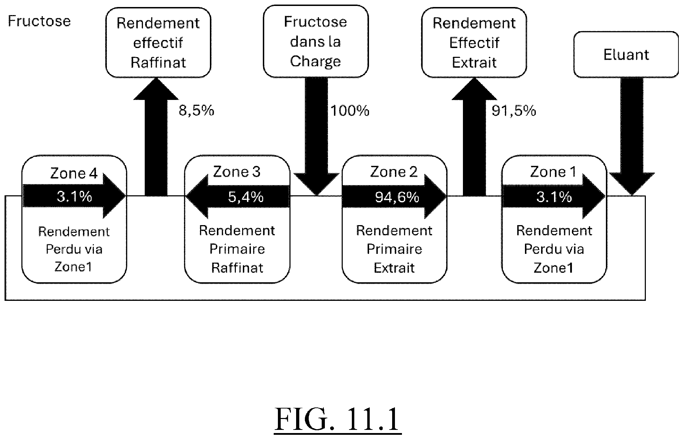

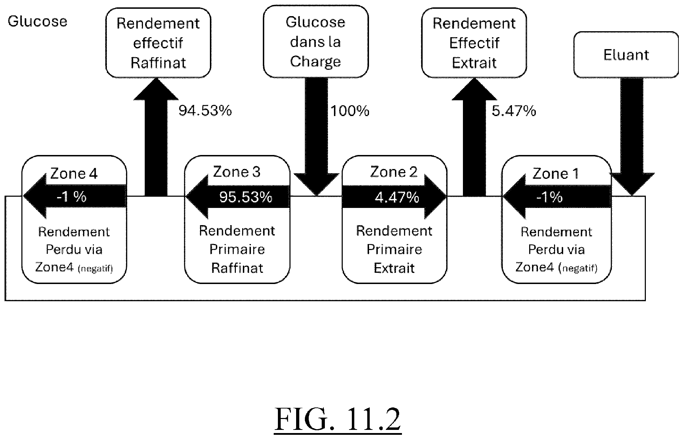

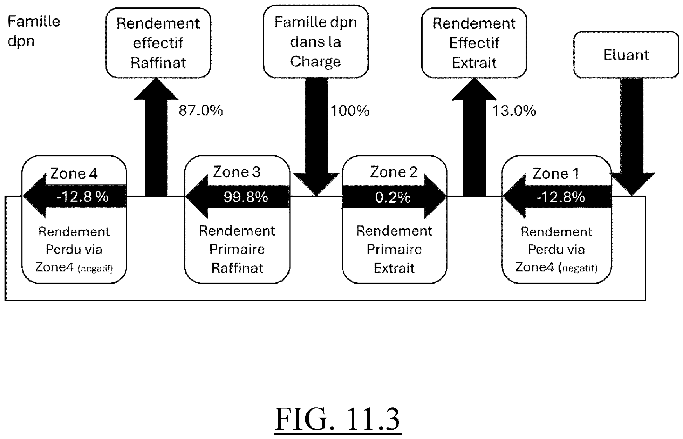

Les **figures 11.1** **11.2** **et** **11.3** représentent de manière schématique la répartition des différents rendements dans le système de chromatographie pour le fructose, le glucose et la famille de dpn, et en particulier le rendement perdu par rapport au rendement primaire à l'extrait fourni par la fonction, pour un rendement effectif calculé selon la figure 10.

### Usage de la seconde famille d'intelligence artificielle

Pour la seconde famille d'intelligence artificielle trois modèles d'IA ont été réalisés pour les espèces fructose, glucose et dpn. Chacun de ces modèles utilise les données BV raffinat et BV extrait ainsi que les rendements des dpn, glucose et fructose.

Le modèle d'intelligence artificielle pour le fructose calcule un rendement perdu de 2.65% correspondant à une fuite de zone 1.

Le modèle d'intelligence artificielle pour le glucose calcule un rendement perdu de -0.7% correspondant à une fuite de zone 4.

Le modèle d'intelligence artificielle pour la famille dpn calcule un rendement perdu de -13.0% correspondant à une fuite de zone 4.

### Résumé des résultats et vérification

Le tableau ci-dessous résume les résultats obtenus et calcule également le rendement primaire pour chacun des composés.

| | | Premier modèle d'IA | | Seconds Modèles d'IA | |
|---|---|---|---|---|---|
| Composé | Rendement Effectif | Rendement Perdu | Rendement Primaire | Rendement Perdu | Rendement Primaire |
| Dpn | 13.0% | -12.80% | 0.20% | -13.00% | 0.0% |
| Glucose | 5.47% | -1.00% | 4.47% | -0.70% | 4.77% |
| Fructose | 91.50% | 3.1% | 94.6% | 2.65% | 94.15% |

Pour vérifier les résultats obtenus par les modèles d'IA, il est nécessaire de procéder à différents réglages additionnels.

Ainsi pour le fructose, le rendement attendu si l'on élimine les fuites de zone 1 en augmentant le BV1 est égal à 94.6% et à 94.15% selon les modèles. En augmentant le BV1 à 0.687 puis à 0.706 le rendement effectif fructose passe respectivement à 93.5% et 93.6% le plateau est atteint et dès lors, on peut conclure qu'il n'y a plus de rendement perdu et ainsi, 93.6% est le rendement primaire. Ce qui signifie que le rendement perdu par la zone 1 était de 2.1% alors que les modèles d'IA évaluaient 3.1% et 2.65%.

Si maintenant l'on décide de baisser la zone 4 pour vérifier la prédiction de rendement perdu du glucose en baissant la zone 4 de 0.53 à 0.5, le rendement effectif du glucose à l'extrait passe à 4.75%. Ce qui signifie que le rendement perdu par la zone 4 était de -0.72% alors que les modèles d'IA évaluaient -1% et -0.7%.

Pour effectuer la vérification, le volume d'eau a dû passer de 0.138 à 0.205. Les évaluations des rendements perdus ont été précis à 1% près ce qui correspond à une erreur acceptable pour effectuer une décision de modification de réglage.

### Critères de cohérence

Comme vu dans l'exemple précédent, les modèles d'IA selon l'invention présentent de bonnes performances toutefois, de l'une à l'autre, des écarts subsistent et la précision est de l'ordre de 1%. Les résultats des modèles sont dépendants également de la qualité analytique qui n'est pas toujours fiable. Des « hallucinations » peuvent également se produire sur des données qui seraient par exemple éloignées des données d'apprentissages. Dans de telles circonstances, la demanderesse a découvert un critère de cohérence simple à mettre en place pour l'ensemble des modèles d'IA utilisées.

Le critère de cohérence consiste à ordonner les composés par ordre d'élution sur une colonne et à vérifier la croissance des rendements primaires et perdus.

Dans l'exemple précédent si l'on classe les composés par ordre de rétention on a : famille dpn < Glucose < Fructose

En utilisant cet ordre pour le rendement perdu on observe :
- -12.8% < -1% < 3.1% pour le premier modèle
- -13% < -0.7% < 2.65% pour les seconds modèles d'IA

En utilisant cet ordre pour le rendement primaire on observe :
- 0.2 < 4.47% < 94.6% pour le premier modèle
- 0% < 4.77% < 94.15% pour les seconds modèles d'IA

Le rendement primaire doit également être positif.

Lorsque des composés possèdent des rétentions proches, ils doivent avoir des rendements perdus et primaires similaires, on peut alors soit tolérer une variation de 1 à 2%, soit utiliser une moyenne pour cette famille de produit avant d'appliquer le critère de vérification par croissance des rendements.

Ce critère peut se mesurer en comptant le nombre fois où la croissance des rendements perdu et primaires ne sont pas observés. Et ainsi juger de la cohérence du résultat de calcul.

Naturellement cet ordre de croissance en fonction de l'ordre d'élution correspond à la norme prise en considérant le rendement primaire, effectif et perdu pour la ligne d'extrait. Si l'on considère la ligne de raffinat comme référence, alors le critère de cohérence devient un critère de décroissance par rapport aux ordres d'élution.

### Application à des procédés chromatographiques à trois fractions et plus

Il existe des procédés permettant de collecter plusieurs fractions, et pas seulement une fraction extrait et une fraction raffinat. Ces procédés impliquent des systèmes multicolonne et l'usage de sous-séquences périodiques ou non, comprenant des étapes d'injection de phase mobile, de produit à traiter, de collecte d'au moins un extrait et d'au moins un raffinat, de façon similaire aux procédés deux fractions, ils sont dans cette demande considérés comme entrant dans la famille des procédés de type lit mobile simulé. Les modèles d'intelligence artificielle peuvent également y être utilisés selon les procédés.

Si les séquentiels des procédés sont périodiques, c'est-à-dire que l'eau et le produit à traiter sont injectés plusieurs fois dans le cycle (autant de fois que de colonnes, ou moitié moins si l'injection est réalisée une colonne sur deux), alors les équivalents des zones 1 et 4 du procédé SMB existent formellement comme sur un procédé SMB, la prise de profil se réalise de la même façon. Les rendements perdus à travers les zones 1 et 4 sont mesurables avec les mêmes protocoles et le premier modèle d'intelligence artificielle s'applique.

Le second et le troisième modèles d'intelligence artificielle s'appliquent dans tous les cas.

Que le procédé soit périodique ou non périodique, le second modèle d'intelligence artificielle s'applique en considérant alors des données d'entrées du modèle différentes : au lieu d'un seul rendement par espèce sur un procédé à deux fraction (par exemple le rendement d'extrait, le rendement du raffinat étant le complément à 100% du rendement d'extrait) il est nécessaire de considérer 2 rendements sur un procédé à 3 fractions (le rendement manquant étant le complément à 100% des deux rendements considérés), de même il sera nécessaire de considérer 3 rendements sur un procédé à 4 fractions etc...

Ainsi, pour une simulation d'un procédé à 3 fractions, la base de données d'entrée sera composée du rendement effectif de deux des trois fractions, des volumes des trois fractions et toujours pour calculer les rendements perdus par les équivalents des zones 1 et 4 du procédé considéré.

## Revendications

1. Procédé mis en œuvre par ordinateur pour l'apprentissage automatique d'une fonction configurée pour contrôler un procédé de séparation chromatographique d'un mélange comprenant au moins deux composés dans un système multicolonne de type lit mobile simulé, le système comprenant des colonnes connectées en série remplies de phase stationnaire et des points d'injection de mélange, d'injection d'éluant, de collecte d'extrait et de collecte de raffinat commutant de manière cyclique entre les colonnes, le système comprenant des zones 1, 2, 3 et 4, la fonction comprenant au moins un modèle configuré pour prendre en entrée des données de fonctionnement et pour fournir en sortie un rendement perdu par rapport à un rendement primaire pour l'un des composés du mélange, le procédé d'apprentissage comprenant :
- une obtention (S11) d'un ensemble de données comprenant, pour un ensemble d'échantillons d'entraînement, des données de fonctionnement et des rendements perdus associés ; et
- un apprentissage automatique (S12) de la fonction à partir de l'ensemble de données obtenu.

2. Procédé d'apprentissage selon la revendication 1, dans lequel le rendement primaire est obtenu en maximisant le volume de la zone 1 et en minimisant le volume de la zone 4.

3. Procédé d'apprentissage selon la revendication 1 ou 2, dans lequel les données de fonctionnement prises en entrée par le au moins un modèle comprennent des paramètres incluant des volumes de raffinat et d'extrait.

4. Procédé d'apprentissage selon l'une quelconque des revendications précédentes, dans lequel la fonction comprend un premier modèle, les données de fonctionnement prises en entrée par le premier modèle incluant des mesures de concentration en différents nœuds du système, et/ou des mesures de concentration dans l'extrait et/ou le raffinat.

5. Procédé d'apprentissage selon la revendication 4, dans lequel les mesures de concentration en différents nœuds du système comprennent :
- au moins une valeur de concentration prélevée en zone 4 et en zone 1 ; et
- au moins une valeur de concentration prélevée en zone 2 et en zone 3.

6. Procédé d'apprentissage selon la revendication 4 ou 5, dans lequel les échantillons d'entraînement incluent des échantillons d'entraînement pour les séparations chromatographiques suivantes :
- plusieurs isothermes, par exemple de type Langmuir, linéaire et anti-Langmuir, parmi lesquelles de façon non restrictive :
o une purification d'un acide lactique, par exemple de type Langmuir ;
o une purification de sucres glucose-fructose, par exemple de type anti-Langmuir ;
o une purification de glycérol et sels, par exemple de type linéaire,
les échantillons d'entraînement pouvant optionnellement inclure des échantillons d'entraînement pour différentes vitesses d'écoulement dans le système.

7. Procédé d'apprentissage selon l'une quelconque des revendications précédentes, dans lequel la fonction comprend un deuxième modèle, les données de fonctionnement prises en entrée par le deuxième modèle incluant des mesures de rendement de tous les composés de la séparation chromatographique dans l'extrait et/ou le raffinat.

8. Procédé d'apprentissage selon l'une quelconque des revendications précédentes, dans lequel l'ensemble de données est obtenu par simulation du procédé de séparation chromatographique.

9. Procédé d'apprentissage selon l'une quelconque des revendications précédentes, dans lequel la fonction comprend un troisième modèle, les données de fonctionnement prises en entrée par le troisième modèle sont des paramètres procédés.

10. Procédé d'apprentissage selon l'une quelconque des revendications précédentes, dans lequel chaque modèle a une architecture comprenant :
- au moins une couche cachée :
- une fonction d'unité linéaire rectifiée (ReLU) ; et
- une couche de sortie incluant une fonction linéaire.

11. Procédé d'utilisation d'une fonction apprise automatiquement selon le procédé d'apprentissage automatique de l'une quelconque des revendications précédentes, le procédé d'utilisation comprenant :
- une obtention (S21) de données de fonctionnement d'un procédé de séparation chromatographique dans un système multicolonne de type lit mobile simulé ; et
- une application (S22) de la fonction aux données de fonctionnement obtenues.

12. Procédé d'utilisation selon la revendication 11, dans lequel le procédé comprend en outre, après l'application de la fonction, une utilisation (S23) du rendement perdu fourni en sortie par la fonction pour contrôler le procédé de séparation chromatographique.

13. Procédé d'utilisation selon la revendication 11 ou 12, dans lequel le procédé comprend en outre :
- une mise en place et/ou une utilisation :
o d'un premier critère de cohérence du rendement perdu comprenant une vérification de la croissance du rendement perdu pour chaque composé ou famille de composés ordonnés selon leur ordre de rétention respectif, le premier critère étant optionnellement mesuré en comptabilisant le nombre de fois où la croissance des rendements perdus est en inadéquation avec la croissance des ordres de rétention ; et/ou
o d'un deuxième critère de cohérence du rendement primaire comprenant une vérification de la croissance du rendement primaire pour chaque composé ou famille de composés ordonnés selon leur ordre de rétention respectif, le deuxième critère étant optionnellement mesuré en comptabilisant le nombre de fois où la croissance des rendements primaires est en inadéquation avec la croissance des ordres de rétention.

14. Programme d'ordinateur comprenant des instructions pour l'exécution du procédé d'apprentissage automatique de l'une des revendications 1 à 9 et/ou du procédé d'utilisation de l'une des revendications 10 à 13 lorsque ledit programme est exécuté sur un ordinateur.

15. Support de stockage lisible par ordinateur sur lequel est enregistré le programme d'ordinateur de la revendication 14.

16. Système comprenant un processeur couplé à une mémoire, la mémoire ayant enregistré le programme d'ordinateur de la revendication 14.

## Revendications modifiées

### Revendications modifiées conformément à la règle 137(2) CBE.

1. Procédé mis en œuvre par ordinateur pour l'apprentissage automatique d'une fonction configurée pour contrôler un procédé de séparation chromatographique d'un mélange comprenant au moins deux composés dans un système multicolonne de type lit mobile simulé (100), le système comprenant des colonnes (121, 123, 125) connectées en série remplies de phase stationnaire et des points d'injection de mélange (112), d'injection d'éluant (116), de collecte d'extrait (110) et de collecte de raffinat (114) commutant de manière cyclique entre les colonnes, le système comprenant des zones 1 (131), 2 (132), 3 (133) et 4 (134), la fonction comprenant au moins un modèle configuré pour prendre en entrée des données de fonctionnement et pour fournir en sortie un rendement perdu par rapport à un rendement primaire pour l'un des composés du mélange, le procédé d'apprentissage comprenant :
- une obtention (S11) d'un ensemble de données comprenant, pour un ensemble d'échantillons d'entraînement, des données de fonctionnement et des rendements perdus associés ; et
- un apprentissage automatique (S12) de la fonction à partir de l'ensemble de données obtenu.

2. Procédé d'apprentissage selon la revendication 1, dans lequel le rendement primaire est obtenu en maximisant le volume de la zone 1 et en minimisant le volume de la zone 4.

3. Procédé d'apprentissage selon la revendication 1 ou 2, dans lequel les données de fonctionnement prises en entrée par le au moins un modèle comprennent des paramètres incluant des volumes de raffinat et d'extrait.

4. Procédé d'apprentissage selon l'une quelconque des revendications précédentes, dans lequel la fonction comprend un premier modèle, les données de fonctionnement prises en entrée par le premier modèle incluant des mesures de concentration en différents nœuds du système, et/ou des mesures de concentration dans l'extrait et/ou le raffinat.

5. Procédé d'apprentissage selon la revendication 4, dans lequel les mesures de concentration en différents nœuds du système comprennent :
- au moins une valeur de concentration prélevée en zone 4 et en zone 1 ; et
- au moins une valeur de concentration prélevée en zone 2 et en zone 3.

6. Procédé d'apprentissage selon la revendication 4 ou 5, dans lequel les échantillons d'entraînement incluent des échantillons d'entraînement pour les séparations chromatographiques suivantes :
- plusieurs isothermes, par exemple de type Langmuir, linéaire et anti-Langmuir, parmi lesquelles de façon non restrictive :
∘ une purification d'un acide lactique, par exemple de type Langmuir ;
∘ une purification de sucres glucose-fructose, par exemple de type anti-Langmuir ;
∘ une purification de glycérol et sels, par exemple de type linéaire,
les échantillons d'entraînement pouvant optionnellement inclure des échantillons d'entraînement pour différentes vitesses d'écoulement dans le système.

7. Procédé d'apprentissage selon l'une quelconque des revendications précédentes, dans lequel la fonction comprend un deuxième modèle, les données de fonctionnement prises en entrée par le deuxième modèle incluant des mesures de rendement de tous les composés de la séparation chromatographique dans l'extrait et/ou le raffinat.

8. Procédé d'apprentissage selon l'une quelconque des revendications précédentes, dans lequel l'ensemble de données est obtenu par simulation du procédé de séparation chromatographique.

9. Procédé d'apprentissage selon l'une quelconque des revendications précédentes, dans lequel la fonction comprend un troisième modèle, les données de fonctionnement prises en entrée par le troisième modèle sont des paramètres procédés.

10. Procédé d'apprentissage selon l'une quelconque des revendications précédentes, dans lequel chaque modèle a une architecture comprenant :
- au moins une couche cachée ;
- une fonction d'unité linéaire rectifiée (ReLU) ; et
- une couche de sortie incluant une fonction linéaire.

11. Procédé d'utilisation d'une fonction apprise automatiquement selon le procédé d'apprentissage automatique de l'une quelconque des revendications précédentes, le procédé d'utilisation comprenant :
- une obtention (S21) de données de fonctionnement d'un procédé de séparation chromatographique dans un système multicolonne de type lit mobile simulé ; et
- une application (S22) de la fonction aux données de fonctionnement obtenues.

12. Procédé d'utilisation selon la revendication 11, dans lequel le procédé comprend en outre, après l'application de la fonction, une utilisation (S23) du rendement perdu fourni en sortie par la fonction pour contrôler le procédé de séparation chromatographique.

13. Procédé d'utilisation selon la revendication 11 ou 12, dans lequel le procédé comprend en outre :
- une mise en place et/ou une utilisation :
o d'un premier critère de cohérence du rendement perdu comprenant une vérification de la croissance du rendement perdu pour chaque composé ou famille de composés ordonnés selon leur ordre de rétention respectif, le premier critère étant optionnellement mesuré en comptabilisant le nombre de fois où la croissance des rendements perdus est en inadéquation avec la croissance des ordres de rétention ; et/ou
o d'un deuxième critère de cohérence du rendement primaire comprenant une vérification de la croissance du rendement primaire pour chaque composé ou famille de composés ordonnés selon leur ordre de rétention respectif, le deuxième critère étant optionnellement mesuré en comptabilisant le nombre de fois où la croissance des rendements primaires est en inadéquation avec la croissance des ordres de rétention.

14. Programme d'ordinateur comprenant des instructions pour l'exécution du procédé d'apprentissage automatique de l'une des revendications 1 à 9 et/ou du procédé d'utilisation de l'une des revendications 10 à 13 lorsque ledit programme est exécuté sur un ordinateur.

15. Support de stockage lisible par ordinateur sur lequel est enregistré le programme d'ordinateur de la revendication 14.

16. Système comprenant un processeur couplé à une mémoire, la mémoire ayant enregistré le programme d'ordinateur de la revendication 14.
